# EUROPEAN PATENT APPLICATION

(11) **EP 2 631 825 A1**
(43) Date of publication of application: **28.08.2013**
(21) Application number: 13155150.9
(22) Date of filing: 14.02.2013
(51) Int. Cl.: G06F 17/30

(54) **Communication system, server and terminal, with mounting of a per-conference shared folder**

(30) Priority: 24.02.2012 JP 2012039317
(71) Applicant: Ricoh Company, Ltd., Tokyo 143-8555 (JP)
(72) Inventor: Mihara, Akihiro, Tokyo, 143-8555 (JP); Asai, Takahiro, Tokyo, 143-8555 (JP)
(74) Representative: Schwabe - Sandmair - Marx

(57) **Abstract**

A communication system having a repeating device to relay contents data to multiple terminals in a conference, and a file sharing device to provide a file to the terminals, includes a section to generate location information of a shared folder accessed commonly by the terminals, which is indicated to the multiple terminals, and a table of participating terminals. The file sharing device includes a shared folder, a file sharing table, and a first file synchronizing section to send file information of a file sent by a terminal, to other terminals in the same conference, if the file sent from the terminal is stored in the shared folder. Each of the terminals includes a folder mounting section to mount the shared folder on the requesting terminal, and a second file synchronizing section to send a file to be shared to the shared folder.

## Description

### BACKGROUND OF THE INVENTION

### 1. Field of the Invention

The disclosures herein generally relate to a communication system to relay contents data including images and sound between multiple terminals.

### 2. Description of the Related Art

Electronic conference systems become popular, in which terminals at remote locations communicate with each other via a network such as the Internet to hold a conference. In an electronic conference system, images and sounds captured by a participant of a conference at a terminal are sent to a receiving terminal. The images may be taken with a camera installed in the terminal, and the sounds are input with a microphone. The receiving terminal displays the images on a display and outputs the sounds through a loud speaker or a headset. Therefore, if the terminals are located remotely to each other, it is possible to share the images and sounds by participants in the conference (see, for example, patent document 1). The patent document 1 discloses a technology to send data of material used in a conference to display at a receiving terminal so that the same material can be shared at both the sending and receiving terminals.

Incidentally, the material displayed at a sending or receiving terminal is often a file for an application program. On the other hand, a screen image shared in an electronic conference system is a captured image of the material shown on a display. Therefore, some practical needs may arise, such as reviewing all the material due to a partial image on a screen, viewing pages before or after the displayed page, or enlarging text or images.

To fulfill these needs, one may consider sharing an original material file itself among terminals. As a method to share a material file among terminals, a sending terminal may send an electronic mail with the file attached to receiving terminals. However, the method degrades ease of operation of the electronic conference system because it may take time and attention of a participant (maybe a presenter) who operates the terminal and sends the e-mail at the same time. Another disadvantage of the method is that security of the attached file may not be guaranteed if the electronic mail is sent through a public network.

Another method to share a material file among terminals would be to have a service sending images and sounds also send the material file. However, a conference may become troubled with non-smooth transmission of images and sounds because the service is primarily operating to transmit images and sounds smoothly, which is interrupted with transmission of materials.

### Patent literature:

1. U.S. Patent No. 6760749

### SUMMARY OF THE INVENTION

It is a general object of at least one embodiment of the present invention to provide a communication system in which not only images and sound, but also materials at hand can be shared among multiple terminals, which substantially obviates one or more problems caused by the limitations and disadvantages of the related art.

According to at least one embodiment of the present invention, a communication system having a repeating device to relay contents data to multiple terminals in a conference, and a file sharing device to provide a file to the terminals, includes a section to generate location information of a shared folder accessed commonly by the terminals, which is indicated to the multiple terminals, and a table of participating terminals. The file sharing device includes a shared folder, a file sharing table, and a first file synchronizing section to send file information of a file sent by a terminal, to other terminals in the same conference, if the file sent from the terminal is stored in the shared folder. Each of the terminals includes a folder mounting section to mount the shared folder on the requesting terminal, and a second file synchronizing section to send a file to be shared to the shared folder.

It is possible to provide a communication system in which not only images and sound, but also materials at hand can be shared among multiple terminals.

### BRIEF DESCRIPTION OF THE DRAWINGS

Other objects and further features of embodiments will be apparent from the following detailed description when read in conjunction with the accompanying drawings, in which:
FIG. 1A is a schematic view illustrating a transmission system according to an embodiment of the present invention;
FIG. 1B is a schematic view illustrating a transmission system according to another embodiment of the present invention;
FIG. 2 is an external view of a transmission terminal according to an embodiment of the present invention;
FIG. 3 is a hardware configuration diagram of a transmission terminal according to an embodiment of the present invention;
FIG. 4 is a hardware configuration diagram of a transmission management system, a repeating device, a program providing system, a temporary storage for files, or a maintenance system, according to an embodiment of the present invention;
FIGS. 5A-5D are functional block diagrams illustrating terminals, devices, and systems constituting a transmission system according to an embodiment of the present invention;
FIG. 6 is a functional block diagram illustrating the repeating device selection section 56 in FIG. 5D in details;
FIG. 7 is a schematic view illustrating a changed quality managing table;
FIGS. 8A-8C are schematic views illustrating picture qualities of image data;
FIG. 9 is a schematic view illustrating a repeating device managing table;
FIG. 10 is a schematic view illustrating a terminal authentication managing table;
FIG. 11 is a schematic view illustrating a terminal managing table;
FIG. 12 is a schematic view illustrating an address listing managing table;
FIG. 13 is a schematic view illustrating a session managing table;
FIG. 14 is a schematic view illustrating a quality managing table;
FIG. 15 is a schematic view illustrating an attribute managing table;
FIGS. 16A-16C are schematic views illustrating a shared folder table;
FIG. 17 is a sequence chart illustrating a procedure to manage status information indicating working statuses of repeating devices;
FIG. 18 is a schematic view illustrating transmitting status of image data, audio data, and various managing information;
FIG. 19 is a sequence chart illustrating a preparation procedure to start up a call between transmission terminals;
FIG. 20 is a sequence chart illustrating a selection procedure of a repeating device;
FIG. 21 is a schematic view illustrating an address list according to an embodiment;
FIG. 22 is an example of a schematic view illustrating general features of an electronic conference system;
FIG. 23 is an example of an overall configuration diagram of an electronic conference system;
FIG. 24 is an example of a sequence chart illustrating a procedure to send/receive files between terminals in an electronic conference system according to Example 1;
FIG. 25 is an example of a schematic view illustrating mount of shared folders;
FIGS. 26A-26B are schematic views illustrating examples of file sharing;
FIGS. 27A-27B are schematic views illustrating examples of file sharing;
FIGS. 28A-28B are schematic views illustrating examples of file sharing;
FIG. 29 is an example of a sequence chart illustrating a procedure to send/receive files among terminals in an electronic conference system according to Example 2;
FIG. 30 is an example of a sequence chart illustrating a procedure to terminate an electronic conference system according to Example 3;
FIG. 31 is an example of an overall configuration diagram of an electronic conference system according to Example 4;
FIG. 32 is an example of a sequence chart illustrating a procedure to send/receive files between terminals in an electronic conference system according to Example 4; and
FIG. 33 is an example of a flowchart illustrating a procedure for a management system to confirm routing paths.

### DESCRIPTION OF THE PREFERRED EMBODIMENTS

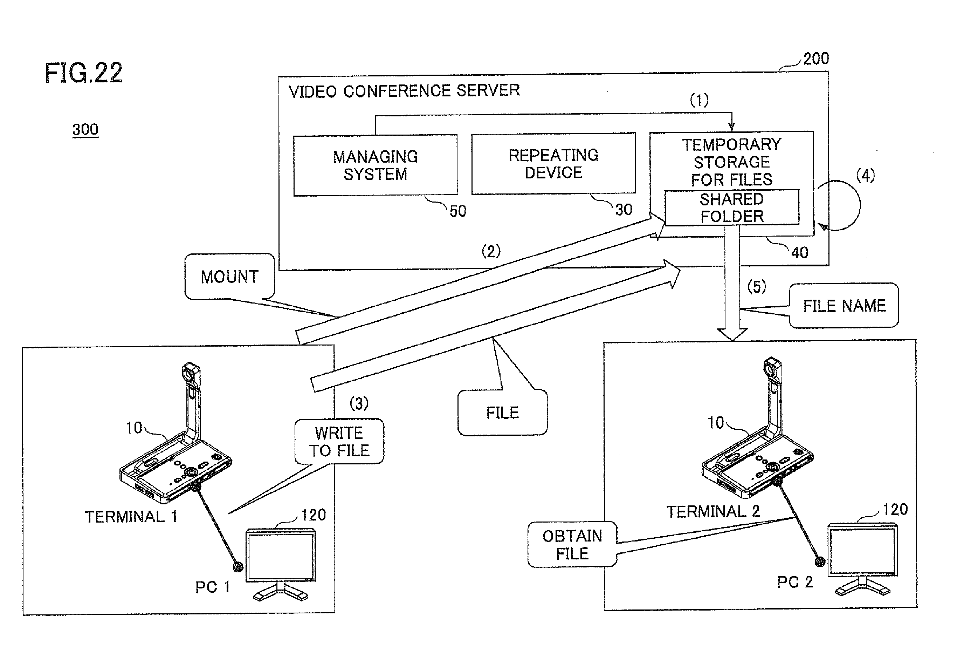

In the following, embodiments of the present invention will be described with reference to the accompanying drawings. FIG. 22 is an example of a schematic view illustrating general features of an electronic conference system. An electronic conference system 300 includes a video conference server 200 and two or more sets of a terminal 10 and a PC 120.

The videoconference server 200 includes a transmission management system, or a management system 50, repeating devices 30, and a temporary storage for files 40. The management system 50 provides a service to manage communication between terminals participating in a conference. For this service, for example, the management system 50 generates a session ID to identify a session in which contents data, such as image or audio data, is transferred between terminals. With this session ID, it is possible to identify terminals sharing a file in the electronic conference system 300.

The repeating device 30 provides a service relaying contents data. The services include, for example, to monitor delay time to optimize a relaying path, a resolution, or the like of the contents data.

On the other hand, the temporary storage for files 40 provides a service to share files among terminals participating in a conference. The service will be explained with an example in which a terminal 1 and a terminal 2 share a file in PC 1 in FIG. 22.
(1) Once a conference has started, the management system 50 has the temporary storage for files 40 generate a shared folder. The temporary storage for files 40 generates the shared folder to be shared with terminals participating in the conference, then, indicates the shared folder URI and account information to the terminals 1 and 2.
(2) The terminals 1 and 2 mount the folder on the shared folder URI using the account information. Here, to "mount" means to have a shared folder in the temporary storage for files 40 be used by the terminals 1 and 2 as if it were a folder in the local device.
(3) For example, if the PC 1 writes a file in the terminal 1, the terminal 1 detects the write, then, sends the file to the temporary storage for files 40. The file is not left in the terminal 1.
(4) The temporary storage for files 40 stores the file in the shared folder.
(5) The temporary storage for files 40 sends the filename of the file stored in the shared folder to the terminal 2 mounting on the shared folder. Unless receiving an explicit request, the contents of the file are not sent to the terminal 2. A user of the PC 2 may visually examine the file name, and if necessary, sends a request for the file to the temporary storage for files 40. When detecting a user operation or the like, the PC 2 can obtain the contents of the file from the shared folder via the terminal 2, to display the file on the PC 2.

As described above, just by having the PC1 write a file in the terminal 1, the terminal 1 and 2 can share the same file.

In the electronic conference system 300 according to the present embodiment, file sharing is a different service from a service provided by the repeating device 30, which is transmission of contents data. Therefore, the terminals can share files without affecting transmission of contents data. Also, as the temporary storage for files 40 manages a file by associating it with a session ID, the temporary storage for files 40 can manage file sharing, which is a different service from a service provided by the management system 50. Also, as a file is shared by only the terminals that have the same session ID in the conference, it is possible to establish security.

### << Overall configuration of embodiment >>

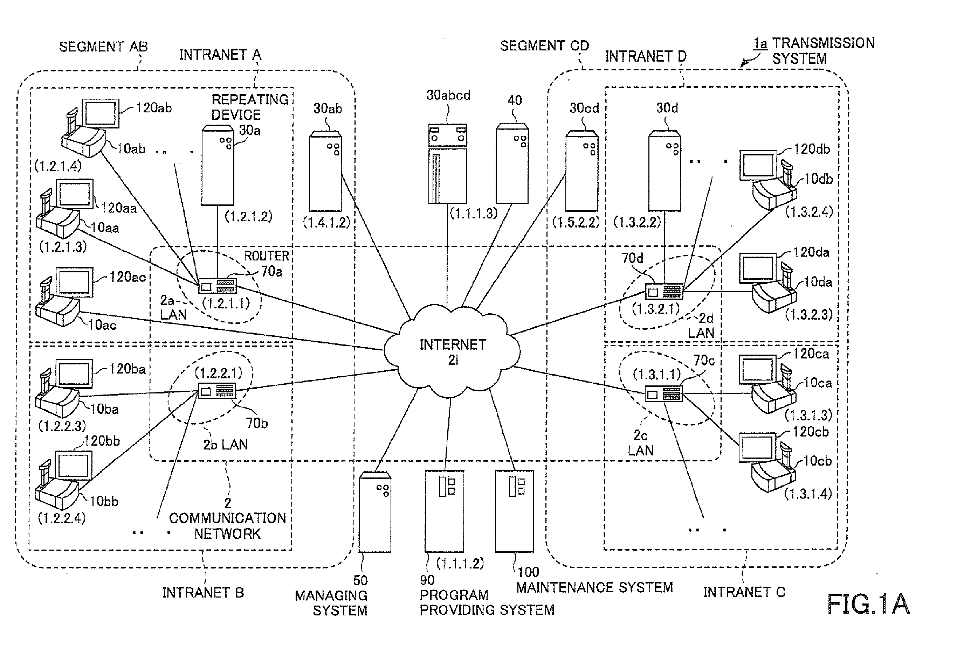

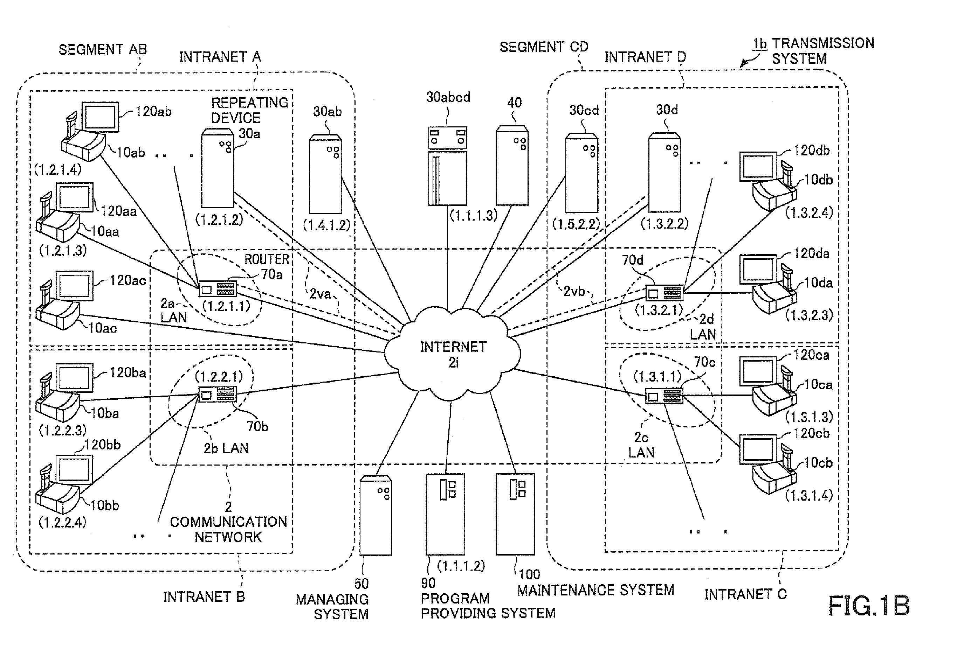

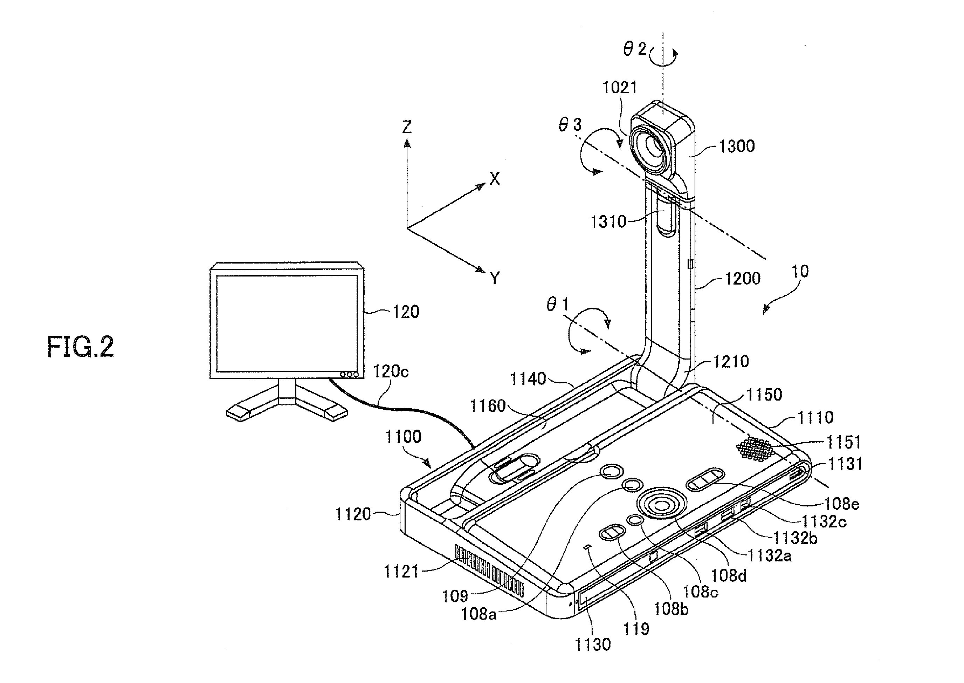

In the following, an embodiment of the present invention will be explained with reference to FIG. 1A to FIG. 25. First, the present embodiment will be summarized with reference to FIGS. 1A-1B and 2. FIG. 1A or 1B is a schematic view illustrating a transmission system according to the present embodiment.

A transmission system includes a data providing system and a communication system. The data providing system executes one-way transmission of contents data from a transmission terminal to another transmission terminal via the transmission management system. The communication system transfers information, emotions, or the like among multiple transmission terminals via the transmission management system. The communication system is a system for transferring information, emotions, or the like among multiple communication terminals, which correspond to transmission terminals, via a communication managing system, which corresponds to the transmission managing system. Examples of the communication system include: a TV conference system, a TV telephone system, an audio conference system, an audio phone call system, a PC display sharing system, and the like.

In the present embodiment, taking a TV conference system as an example of the communication system, taking a TV conference management system as an example of the communication management system and taking a TV conference terminal as an example of the communication terminal, a description of a transmission system, a transmission management system and transmission terminals will follow. In other words, transmission terminals and a transmission management system of the present invention can be used in a TV conference system, as well as in a communication system or a transmission system.

A transmission system 1a shown in FIG. 1A includes multiple transmission terminals 10aa, 10ab, etc., displays 120aa, 120ab, etc. for the transmission terminals 10aa, 10ab, etc., multiple repeating devices 30a, 30ab, 30cd, 30d, and 30abcd, a transmission management system 50, a program providing system 90, the temporary storage for files 40, and a maintenance system 100.

It is noted that in the following, a "transmission terminal" will be simply called a "terminal" and a "transmission management system" will be simply called a "management system". Also in the present embodiment, a "terminal 10" may denote an arbitrary terminal among terminals 10aa, 10ab, etc., a "display 120" may denote an arbitrary display among displays 120aa, 120ab, etc., and a "repeating device 30" may denote an arbitrary repeating device among repeating devices 30a, 30ab, 30cd, 30d, and 30abcd.

The terminal 10 transmits image or audio data as contents data. Namely, a call in the present embodiments includes not only transmission of audio data, but also transmission of image data. Namely the terminal 10 in the present embodiment transmits image and audio data. However, the terminal 10 may be configured to transmit audio data only, not to transmit image data.

In the present embodiment, it is assumed that image data is a moving picture. But it can be a still picture. Or, image data may include both moving pictures and still pictures. The repeating device 30 relays image and audio data among multiple terminals 10. The management system 50 manages the terminals 10, the repeating device 30, and the temporary storage for files 40 as a whole.

Also, multiple routers 70a, 70b, 70c, and 70d shown in the FIG. 1 select optimal paths for image and audio data. It is noted that the "router 70" may denote an arbitrary router among routers 70a, 70b, 70c, and 70d.

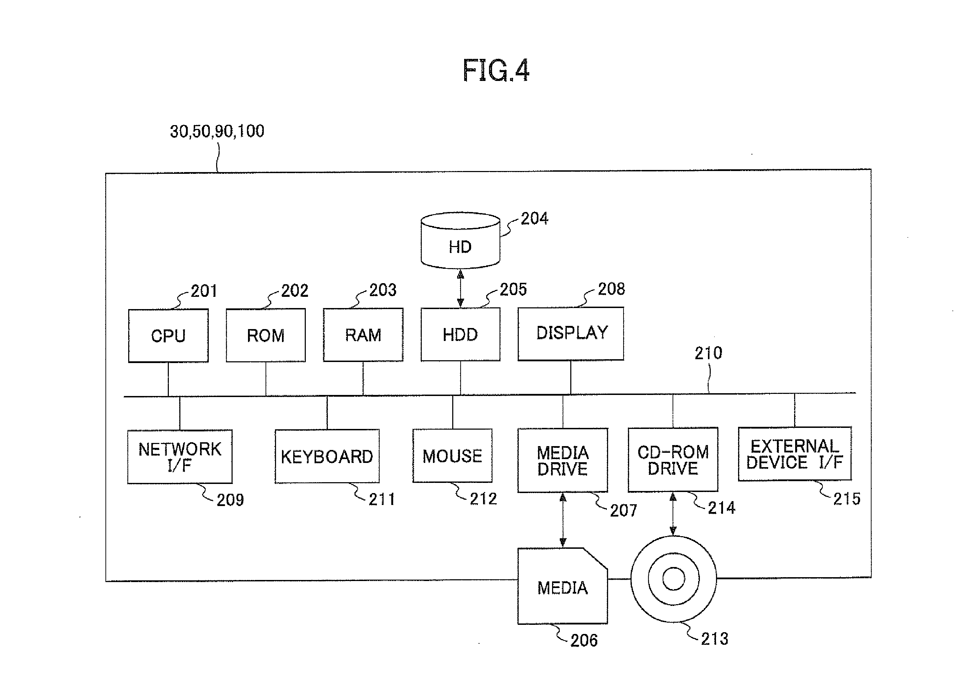

The program providing system 90 provides one or more hard disks shown in FIG. 4 to store programs for a terminal to implement various functions on the terminals 10, which can be sent to the terminals 10. The HD in the program providing system 90 also stores programs for a repeating device to implement various functions on the repeating device 30, which can be sent to the repeating device 30. Moreover, the HD in the program providing system 90 stores programs for transmission management to implement various functions on the management system 50, which can be sent to the management system 50.

The maintenance system 100 is a computer for operation, management, and maintenance of at least one of the terminal 10, the repeating device 30, the maintenance system 50, or the program providing system 90. For example, if the maintenance system 100 is installed in a domestic location, and the terminal 10, the repeating device 13, management system 50, or the program providing system 90 are installed at overseas locations, then the maintenance system 100 remotely executes operation, management, or maintenance of at least one of the terminal 10, the repeating device 30, the management system 50, or the program providing system 90 via the communication network 2. The maintenance system 100 maintains or manages a product code, a serial number, a buyer, a maintenance checkup, or a failure history of at least one of the terminal 10, the repeating device 30, the management system 50, or the program providing system 90, without using the communication network 2.

Also, the terminals 10aa, 10ab, etc., the repeating device 30a, and the router 70a are connected to the LAN 2a to communicate with each other, and are configured within a certain intranet A. The terminals 10ba, 10bb, etc., and the router 70b are connected to the LAN 2b to communicate with each other, and are configured within a certain intranet B. For example, the intranet A is managed by a company A, and the LAN 2a is installed at an office in Tokyo. Also, the intranet B is managed by a company B, and the LAN 2b is installed at an office in Osaka. Also, the LAN 2a and the LAN 2b are configured in a segment AB. Here, a "segment" means a part of the communication network 2 or a geographical area. The segment AB corresponds to, for example, Japan.

On the other hand, the terminals 10ca, 10cb, etc., and the router 70c are connected to the LAN 2c to communicate with each other, and are configured within a certain intranet C. The terminals 10da, 10db, etc., the repeating device 30d, and the router 70d are connected to the LAN 2d to communicate with each other, and are configured within a certain intranet D. For example, the intranet C is managed by a company C, and the LAN 2c is installed at an office in New York. Also, the intranet D is managed by a company D, and the LAN 2D is installed at an office in Washington, D.C. Also, the LAN 2c and the LAN 2d are configured in a segment CD. In the present embodiment, the segment CD corresponds to, for example, U.S.A. The intranets A-D are connected to the Internet 2i via the routers 70a, 70b, 70c, and 70d, respectively, to communicate with each other. Here, firewalls are provided between each of the intranets A-D and the Internet 2i, respectively.

Also, the terminal 10 can be moved to an area which is different from the area in which it is usually installed, to connect to the Internet 2i to transmit contents data with other terminals via the repeating device 30. For example, the terminal 10ac may be moved to an area other than Tokyo, where it is usually installed, to connect to the intranet A via the Internet 2i to transmit contents data with other terminals via the repeating device 30.

Also, as shown in the transmission system 1b in FIG. 1B, the repeating device 30a, 30d may be connected with the LAN 2a, 2d via VPN connections 2va, 2vb, respectively. In this case, the repeating device 30a may be installed at a different place from the place it is usually installed that is the Tokyo office of the company A. For example, it may be installed at a data center of a company providing the transmission system 1b. It is noted that the transmission system 1b in FIG. 1B has the same configuration as the transmission system 1a in FIG. 1A, except for VPN connections between the receiving devices 30a and 30d and the LAN 2a and 2d, respectively. It is noted that in the present embodiment, a "transmission system 1" may denote an arbitrary one of the transmission system 1a or 1b.

In the transmission system 1 in the present embodiment, the repeating device 30a is connected to the terminals 10aa, 10ab, etc., and the management system 50 via the communication network 2 to communicate with each other. The repeating device 30a is installed in the LAN 2a or the VPN 2va to use communication routes effectively. The repeating device 30a is used to relay contents data when the terminals 10aa, 10ab, etc., make a call to another terminal in the LAN.

In the transmission system 1 in the present embodiment, the repeating device 30d is connected to the terminals 10da, 10db, etc., and the management system 50 via the communication network 2 to communicate with each other. The repeating device 30d is installed in the LAN 2d or the VPN 2vd to use communication routes effectively. The repeating device 30d is used to relay contents data when the terminals 10da, 10db, etc., make a call to another terminal in the LAN.

In the transmission system 1 in the present embodiment, the repeating device 30ab is connected to the terminals 10aa, 10ab, etc., and 10ba, 10bb, etc., and the management system 50 via the communication network 2 to communicate with each other. The repeating device 30ab is installed in an area other than the area A or B to be less affected by the amount of communication in the LAN. The repeating device 30ab is used to relay contents data when the terminals 10aa, 10ab, etc., and 10ba, 10bb, etc., make a call to another terminal in the LAN 2a-2b. The LAN 2a-2b will be also called the segment AB, hereafter.

In the transmission system 1 in the present embodiment, the repeating device 30cd is connected to the terminals 10ca, 10cb, etc., and 10da, 10db, etc., and the management system 50 via the communication network 2 to communicate with each other. The repeating device 30cd is installed in an area other than the area C or D to be less affected by the amount of communication in the LAN. The repeating device 30cd is used to relay contents data when the terminals 10ca, 10cb, etc., and 10da, 10db, etc., make a call to another terminal in the LAN 2c-2d. The LAN 2c-2d will be also called the segment CD, hereafter.

In the transmission system 1 in the present embodiment, the repeating device 30abcd is connected to the terminals 10aa, 10ab, etc., 10ba, 10bb, etc., 10ca, 10cb, etc., 10da, 10db, etc., and the management system 50 via the communication network 2 to communicate with each other. The repeating device 30ab is installed in an area other than the areas A-D to be less affected by the amount of communication in the LAN. The repeating device 30abcd is used to relay contents data when the terminals 10aa, 10ab, etc., 10ba, 10bb, etc., 10ca, 10cb, etc., 10da, 10db, etc., make a call to another terminal in the LAN 2a-2d.

In the transmission system 1 in the present embodiment, the management system 50 and the program providing system 90 are connected to the terminals 10 and the repeating devices 30 via the Internet 2i to communicate with each other. The management system 50 and the program providing system 90 may be located in the area A, B, C, D or any other areas.

It is noted that in the present embodiment, the LAN 2a, the LAN 2b, the Internet 2i, the LAN 2c, the LAN 2d, and the LAN 2e configure the communication network 2. The communication network 2 may include parts not only connected by wired communication, but also by wireless communication.

Also, in FIG. 1, sets of four numerals attached below the terminals 10, the repeating devices 30, the management system 50, the routers 70, and the program providing system 90, show IP addresses with IPv4 format in a simplified manner. For example, the IP address of the terminal 10aa is 1. 2. 1. 3.

Also, although IPv6 can be used instead of IPv4, IPv4 is used here for the sake of simplicity.

### << Hardware configuration of the present embodiment >>

Next, a hardware configuration of the present embodiment will be described. FIG. 2 is an external view of the terminal 10 according to an embodiment of the present invention. It is assumed in the following explanation that x-axis is the longitudinal direction of the terminal 10, y-axis is the direction perpendicular to the x-axis in the horizontal plane, and z-axis or vertical direction is the direction perpendicular to the x-axis and y-axis.

As shown in FIG. 2, the terminal 10 provides a chassis 1100, an arm 1200, and a camera housing 1300. A rear side surface 1110 of the chassis 1100 has multiple air intake holes (not shown). A front side surface 1120 of the chassis 1100 has multiple air outlet holes 1121. With these holes, outside air can be taken in by driving a cooling fan built in the chassis 1100, through the air intake holes (not shown), then exhausted through the air outlet holes 1121. A right side surface 1130 of the chassis 1100 has a sound pickup hole 1131, through which voices, sounds, noises, and the like are captured by a built-in microphone 114, which will be described later.

A top surface of the chassis 1100 has an operation panel 1150. The operation panel 1150 has multiple operation buttons 108a-108e, which will be described later, a power switch 109, an alarm lamp 119, and a sound output hole 1151 through which sounds output from a built-in speaker 115 reaches outside. These parts will be described later. On a left side surface 1140 of the chassis 1100, a concave shaped housing section 1160 is provided to hold the arm 1200 and the camera housing 1300. The right side surface 1130 of the chassis 1100 also has multiple connectors 1132a-1132c to electrically connect cables to an external device connection interface 118, which will be described later. On the other hand, the left side surface 1140 of the chassis 1100 has a connector (not shown) to electrically connect a cable 120c for a display 120 to the external device connection interface 118.

It is noted that in the following, a notation, "operation button 108", will be used when designating an arbitrary one of the operation buttons 108a-108b. Also, a notation, "connector 1132", will be used when designating an arbitrary one of the connectors 1132a-1132c.

The arm 1200 is attached to the chassis 1100 with a torque hinge 1210. It is configured in such a way that the arm 1200 can rotate vertically up to 135 degrees of tilt angle θ1 relative to the chassis 1100. In FIG. 2, the tilt angle θ1 is set at 90 degrees.

The camera housing 1300 has a built-in camera 112 to take a picture of a user, a document, or a room, which will be described later. The camera housing 1300 also has a torque hinge 1310. The camera housing 1300 is attached to the arm 1200 with the torque hinge 1310. It is configured in such a way that the camera housing 1300 can rotate vertically up to ±180 degrees of pan angle θ2, or horizontally up to ±45 degrees of tilt angle θ3 relative to the current angles formed in FIG. 2 by the camera housing 1300 and the arm 1200.

It is noted that the repeating device 30, the management system 50, the program providing system 90, and the maintenance system 100 have a similar external view as a general server computer. Therefore, the external view will not be explained here.

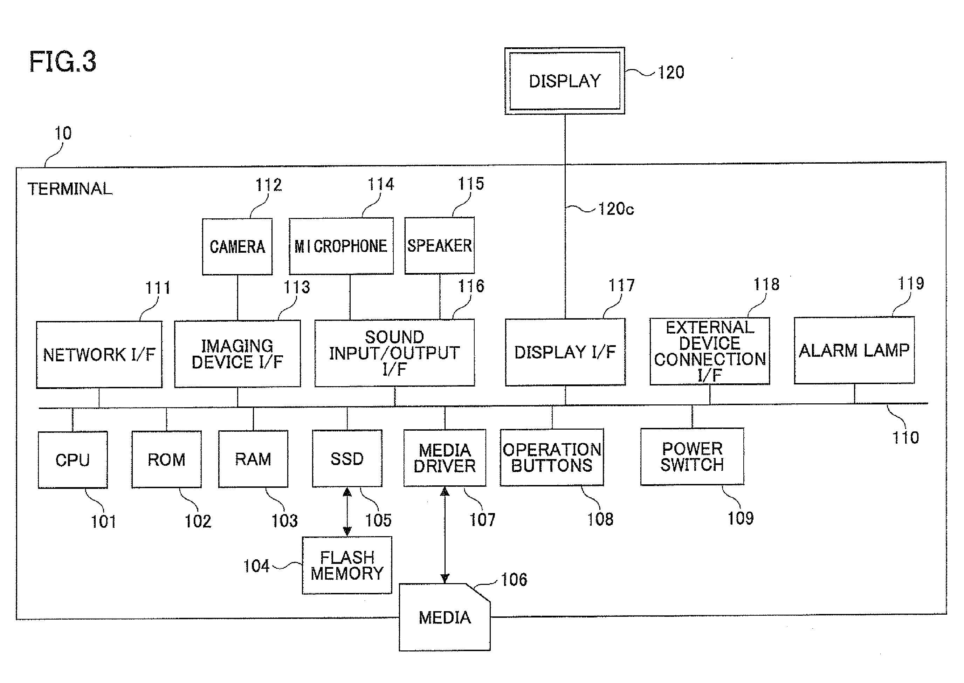

FIG. 3 is a hardware configuration diagram of a transmission terminal according to an embodiment of the present invention. As shown in FIG. 3, the terminal 10 in the present embodiment provides a CPU 101 to control the overall behavior of the terminal 10, a ROM 102 to store programs for the terminal 10, a RAM 103 used as a work area for the CPU 101, a flash memory 104 to store various data such as image data, audio data, or the like, an SSD (Solid State Drive) 105 to control writes/reads of various data to/from the flash memory 104 under the control of the CPU 101, a media drive 107 to control writes/reads of the data to/from recording media 106 such as an SD card, operation buttons 108 for operations such as selecting an address of the terminal 10, the power switch 109 to change on and off of the power source of the terminal 10, and a network interface 111 to transmit data using the communication network 2, which will be described later.

The terminal 10 also provides the built-in camera 112 to obtain image data by taking a picture of a subject under the control of the CPU 101, an imaging device interface 113 to control the camera 112, the built-in microphone 114 to input sounds, the built-in speaker 115 to output sounds, a sound input/output interface 116 to input/output audio signals between the microphone 114 and the speaker 115 under the control of the CPU 101, a display interface 117 to transfer image data to the external display 120 under the control of the CPU 101, the external device connection interface 118 to connect various external devices, and the alarm lamp 119 to alarm failures of various functions in the terminal 10, and a bus line 110 including an address bus, a data bus, and the like to connect the above elements shown in FIG. 3 electrically.

The display 120 is a unit for displaying image data of a subject, operational icons, or the like, on a screen such as an LCD or an organic electroluminescence display. The display 120 is connected to the display interface 117 with the cable 120c. The cable 120c may be a cable for analog RGB or VGA signals, a cable for component video, or a cable for HDMI (High-Definition Multimedia Interface) or DVI (Digital Video Interactive).

The camera 112 includes a solid-state imaging device to convert light into electric charges to obtain an electronic image of a subject. As a solid-state imaging device, a CMOS (Complementary Metal Oxide Semiconductor) or CCD (Charge Coupled Device) may be used.

The external device connection interface 118 may be connected with an external camera, an external microphone, an external speaker, or the like, with a USB cable or the like plugged into a connector 1132 on the chassis 1100 as shown in FIG. 2. If an external camera is connected, the external camera is driven under the control of the CPU 101, with priority over the built-in camera 112. Similarly, if an external microphone or an external speaker is connected, the external microphone or speaker is driven under the control of the CPU 101, with priority over the built-in microphone 114 or the built-in speaker 115, respectively.

It is noted that the recoding media 106 can be easily inserted into or ejected from the terminal 10. Also, instead of the flash memory 104, a non-volatile memory such as an EEPROM (Electrically Erasable and Programmable ROM) may be used, as long as reads/writes of data can be executed under the control of the CPU 101.

Moreover, the programs for the terminal above may be recorded on computer-readable recording media such as the recording media 106 to be distributable, in a format which is installable or executable with a computer. Also, the programs for the terminal above may be stored in the ROM 102, instead of the flash memory 104.

FIG. 4 is a hardware configuration diagram of a transmission management system. The management system 50 provides a CPU 201 to control the overall behavior of the management system 50, a ROM 202 to store programs for transmission control, a RAM 203 used as a work area for the CPU 201, an HD (hard disk) 204 to store various data, an HDD (hard disk drive) 205 to control writes/reads of various data to/from the HD 204 under the control of the CPU 201, a media drive 207 to control writes/reads of the data to/from recording media 206 such as a flash memory, a display 208 to display cursors, menus, windows, characters, images, and various information, a network interface 209 to transmit data using the communication network 2, which will be described later, a keyboard 211 providing multiple keys to enter characters, numerals, various commands, etc., a mouse 212 for various selections or executions, selection of an object, or moving the cursor, a CD-ROM drive 214 to control a CD-ROM (Compact Disc Read Only Memory) 213, which is one of the recoding media attached/detached easily, an external device connection interface 215 to connect various external devices, and a bus line 210 including an address bus, a data bus, and the like to connect the above elements shown in FIG. 4 electrically.

Moreover, the programs for the above programs for transmission control may be recorded on computer-readable recording media such as the recording media 106, CD-ROM 213, etc., to be distributable, in a format which is installable or executable with a computer.

The device 30 has a similar hardware configuration as the management system 50. Therefore, the configuration will not be explained except that the ROM 202 stores programs to control the repeating device 30. Again, the programs to control the repeating device 30 may be recorded on computer-readable recording media such as the recording media 106, CD-ROM 213, etc., to be distributable, in a format which is installable or executable with a computer.

The program providing system 90 also has a similar hardware configuration as to that of the management system 50. Therefore, the configuration will not be explained except that the ROM 202 stores programs to control the program providing system 90. Again, the programs to control the program providing system 90 may be recorded on computer-readable recording media such as the recording media 106, CD-ROM 213, etc., to be distributable, in a format which is installable or executable with a computer.

The maintenance system 1000 also has a similar hardware configuration as the management system 50. Therefore, the configuration will not be explained except that the ROM 202 stores programs to control the maintenance system 100. Again, the programs to control the maintenance system 100 may be recorded on computer-readable recording media such as the recording media 106, CD-ROM 213, etc., to be distributable, in a format which is installable or executable with a computer.

The temporary storage for files 40 also has a similar hardware configuration as the management system 50. Therefore, the configuration will not be explained except that the ROM 202 stores programs to control the temporary storage for files 40. Again, the programs to control the temporary storage for files 40 may be recorded on computer-readable recording media such as the recording media 106, CD-ROM 213, etc., to be distributable, in a format which is installable or executable with a computer.

Other portable, computer-readable recording media such as CD-R (Compact Disc Recordable), DVD (Digital Versatile Disk), BD (Blu-ray disc), etc., may be used.

### « Functional configuration of the embodiment »

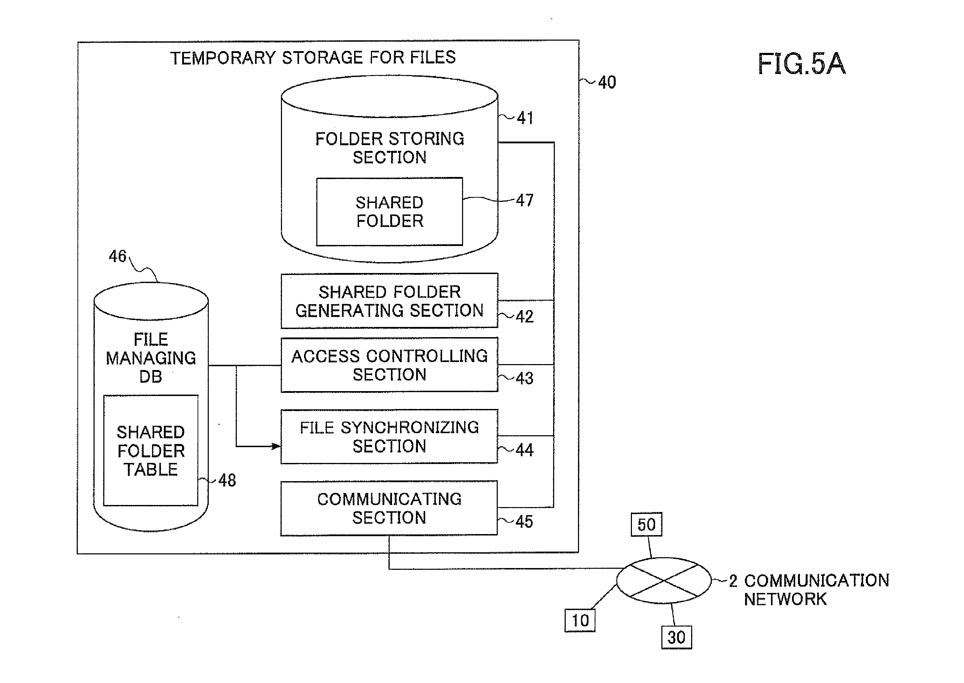

Next, a functional configuration of the present embodiment will be explained. FIGS. 5A-5D are functional block diagrams illustrating terminals, devices, and systems constituting a transmission system according to an embodiment of the present invention. As shown in FIGS. 5A-5D the terminals 10, the repeating device 30, and the management system 50 are connected together via the communication network 2 to make data communication possible. The program providing system 90 and the maintenance system 100 shown in FIG. 1 are not shown in FIGS. 5A-5D because these are not directly relevant to communication via TV conference.

### « Functional configuration of a terminal »

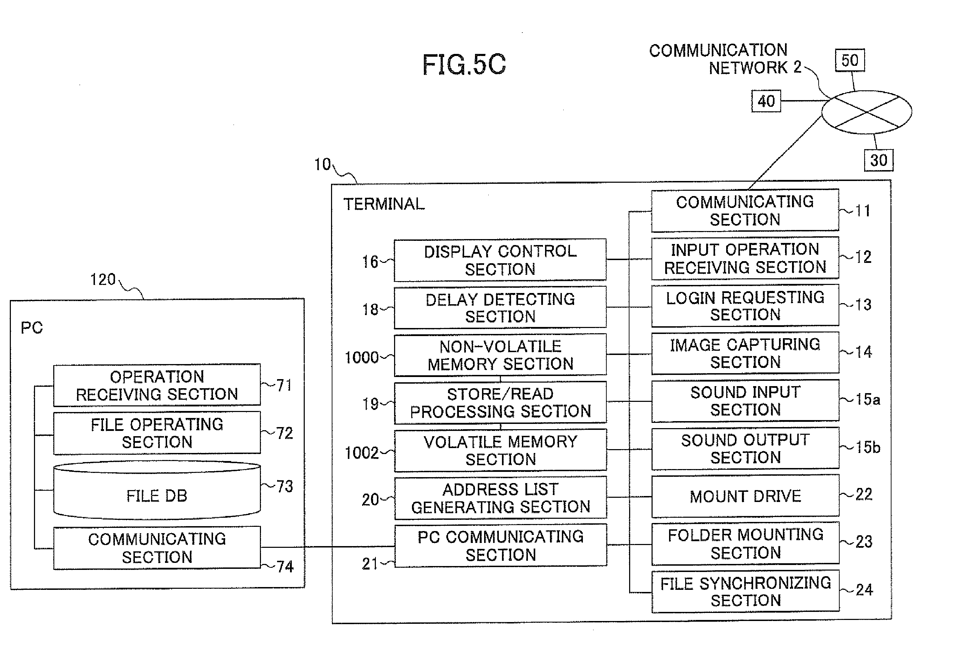

As shown in FIG. 5C, the terminal 10 has a communicating section 11, an input operation receiving section 12, a login requesting section 13, an image capturing section 14, a sound input section 15a, a sound output section 15b, a display controlling section 16, a delay detecting section 18, a store/read processing section 19, an address list generating section 20, a PC communicating section 21, a mount drive 22, a folder mounting section 23, and a file synchronizing section 24. These sections are implemented with hardware elements shown in FIG. 3 and software programs stored in the ROM 102, which are executed by the CPU 101. Also, the terminal 10 includes a non-volatile memory section 1000 implemented with a flash memory 104 shown in FIG. 3, and a volatile memory section 1002 implemented with the RAM 103 shown in FIG. 3.

### << Functional sections of a terminal >>

Next, details of the sections of the terminal will be explained. The communicating section 11 of the terminal 10 is implemented with the network interface 111 shown in FIG. 3, sends/receives various information to/from the other terminals 10, the devices, or the systems via the communication network 2. Before starting a call with a target terminal 10, the communicating section 11 starts to receive various status information of candidate target terminals 10 from the management system 50. The status information of a terminal 10 includes not only a working status of the terminal 10, which shows online/offline status of the terminal 10, but also on-call/off-call status while it is online. Other than the working status of the terminals 10 stated above, the status information may include the followings: a cable is plugged off from the terminal 10; sounds are output, but images are not; sounds are not output, or muted; and so on. In the following, for example, a case in which the status information shows the working status will be explained.

The input operation receiving section 12 is implemented with the operation buttons 108 and the power-on switch 109 to receive various inputs from a user. For example, when the user turns on the switch 109 shown in the FIG. 3, the input operation receiving section 12 shown in FIG. 5C recognizes the turning on of the switch to set the power on. The login requesting section 13 is implemented with instructions executed by the CPU 101 shown in FIG. 3, and in response to the power-on, sends automatically login requesting information and a current IP address of the requesting terminal 10 from the communicating section 11 to the management system 50 via the communication network 2. When the user turns the power switch 109 off, the communicating section 11 sends status information of the power-off to the management system 50, then, the input operation receiving section 12 puts the power off completely. Thus, the management system 50 can recognize that the terminal 10 has changed its status from power-on to power-off.

The image capturing section 14 is implemented with instructions executed by the CPU 101, the camera 112, and the imaging device interface 113 shown in FIG. 3, to take an image of a subject by the camera 112, to output as image data. The sound input section 15a is implemented with the interface 116 shown in FIG. 3, to input sound data which may be obtained from the user's voice changed to audio signals by the microphone 114. The sound output section 15b is implemented with instructions executed by the CPU 101 and the interface 116 shown in FIG. 3, to send audio signals to the speaker 115 to output sounds.

The display controlling section 16 is implemented with the interface 117 shown in FIG. 3, to control transmission of image data to the external display 120. Also, the display controlling section 16 has the display 120 show an address list based on the status information of terminals 10 received by the communicating section 11, before a requesting terminal 10 starts a TV conference call with a desired target terminal 10.

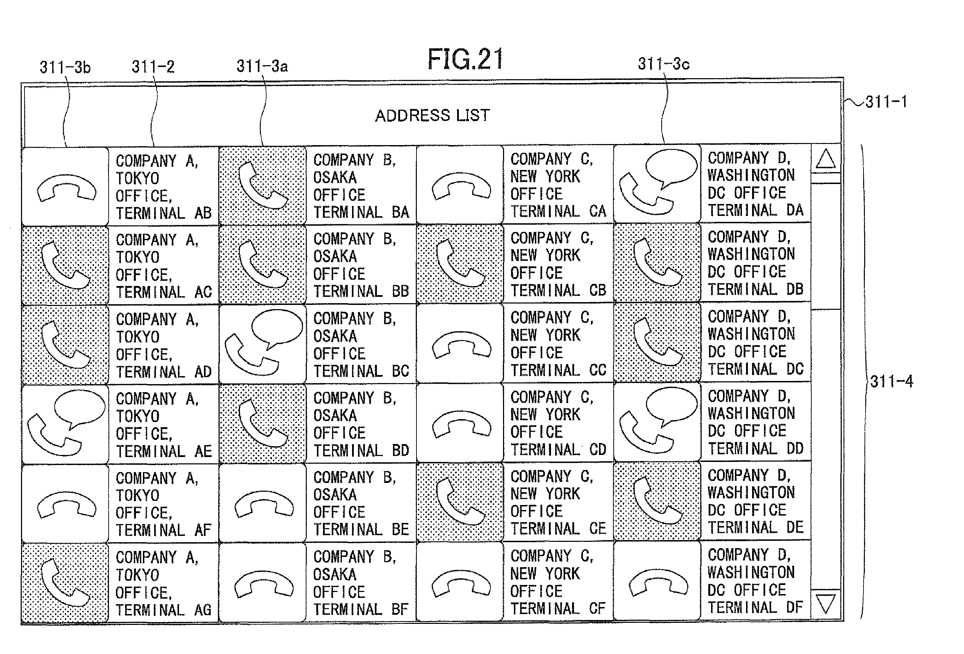

For example, the display controlling section 16 displays an address list frame 311-1 on the display 12 as shown in FIG. 21. The address list frame 311-1 displays addresses, for example, "COMPANY A, TOKYO OFFICE, TERMINAL AB", which has attached an icon showing the status of the terminal 10. For example, the icon 311-3a shows that the terminal 10 is online in a standby mode, and ready to receive a call. The icon 311-3b shows that the terminal 10 is off-line, and cannot receive a call. The icon 311-3c shows that the terminal 10 is making a call with a terminal 10, in which another terminal 10 can participate. The address list frame 311-1 has a scrollbar 311-4. By selecting an upward/downward triangle in the scrollbar, hidden addresses and icons not shown in FIG. 21 can be displayed.

The delay detecting section 18 is implemented with instructions executed by the CPU 101, to detect the delay time (in milliseconds) of image data or sound data which is sent from another terminal 10 via the repeating device 30.

The store/read processing section 19 is implemented with instructions executed by the CPU 101, and a storage device, for example, the SSD 105 shown in FIG. 3, to store various data in the non-volatile memory section 1000, or to read various data from the non-volatile memory section 1000. The non-volatile memory section 1000 stores an identification, a password, and the like to identify the terminal 10. Moreover, the store/read processing section 19 stores various data in the volatile memory section 1002, and reads various data stored in the volatile memory section 1002. The volatile memory section 1002 stores image data and sound data received from a target terminal during a call, which is overwritten every time new data is received. The received image data is displayed on the display 120 before the data is overwritten, and the received audio data is output from the speaker 115 before the data is overwritten.

The address list generating section 20 generates and updates the address list in which statuses of the candidate target terminals 10 are designated with icons as shown in FIG. 21, based on address list information, which will be described later, and the status information of the candidate target terminals.

It is noted that a terminal ID in the present embodiment is used to uniquely identify a terminal 10, and the repeating device ID, which will be described later, is used to uniquely identify a repeating device 30. The IDs are described with languages, characters, symbols, various marks, or the like, or a combination of these.

The PC communicating section 21 is implemented, for example, with the interface 118 shown in FIG. 3, to send/receive data, such as a file, to/from a PC 120. Specifically, the PC communicating section 21 may be implemented with a USB host, a Bluetooth host, a wireless LAN interface, or the like. The terminal 10 in the present embodiment is compatible with USB Mass Storage Class, to be recognized as a storage device by the PC 120.

The mount drive 22 is generated when the terminal 10 has a shared folder 47 mounted. When the terminal 10 obtains an indication of a shared folder URI from the management system 50, the folder mounting section 23 mounts the shared folder 47 on the terminal 10, which generates the mount drive 22. With the mounting, a file in the shared folder 47 and a corresponding file in the mount drive 22 are synchronized.

In the mount drive 22, a file from the PC 120 received by the PC communicating section 21 is written. The mount drive 22 is implemented with a storage device, for example, the RAM 103 or the flash memory 104 shown in FIG. 3.

The file synchronizing section 24 detects that a file has been written in the mount drive 22 by receiving an indication (an interrupt) from the PC communicating section 21, or by monitoring the mount drive 22 periodically.

Detecting that the file has been written on the mount drive 22, the file synchronizing section 24 sends the file in the mount drive 22 to the temporary storage for files 40.

Receiving the file name of the file stored in shared folder 47 from the file synchronizing section 44 in the temporary storage for files 40, the file synchronizing section 24 registers the file name on mount drive 22. Therefore, the file seems to exist on the mount drive 22 as sent from the PC 120.

### (Functional configuration of repeating device)

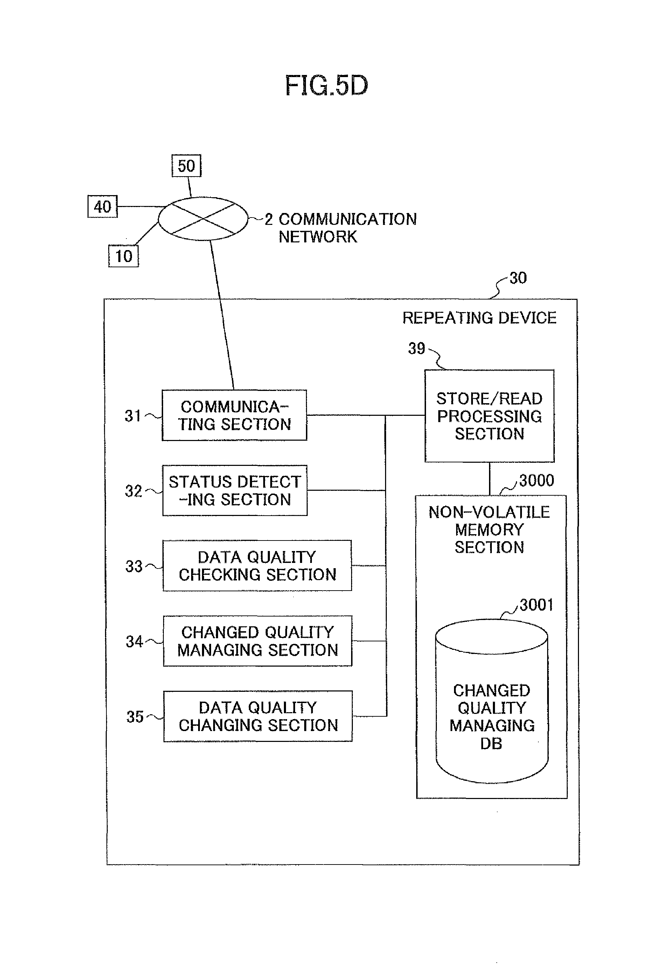

Next, functions and sections of the repeating device 30 will be explained. As shown in FIG. 5D, the repeating device 30 has a communicating section 31, a status detecting section 32, a data quality checking section 33, a changed quality managing section 34, a data quality changing section 35, and a store/read processing section 39. These sections are implemented with hardware elements shown in FIG. 4 and software programs stored in the ROM 202, which are executed by the CPU 201. Also, the repeating device 30 includes a non-volatile memory section 3000 implemented with the HD 204 shown in FIG. 4, which stores various data and information when the power of the repeating device 30 is off.

### (Changed quality managing table)

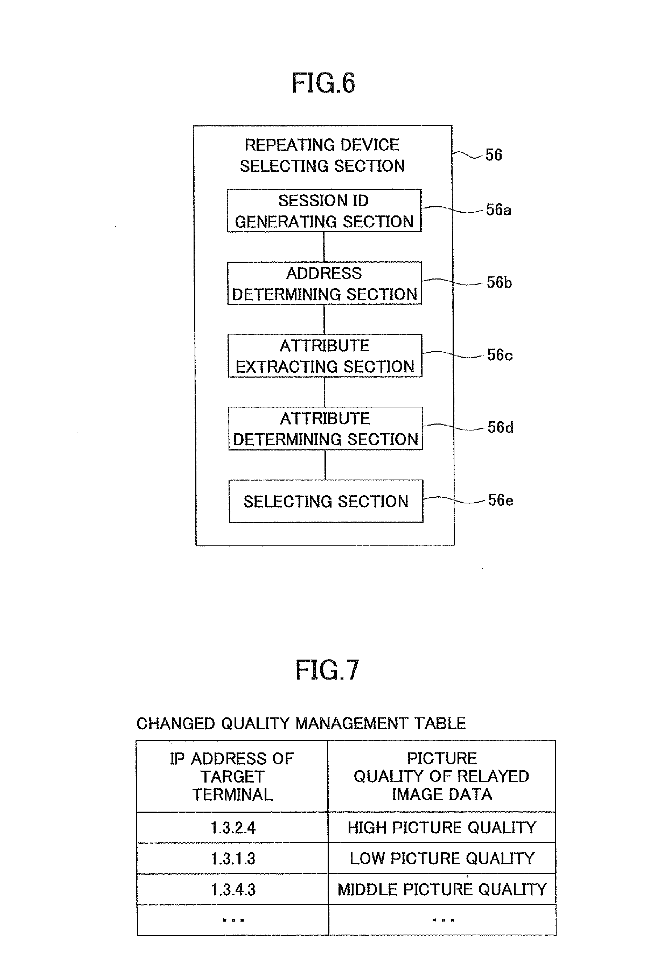

In the non-volatile memory section 3000, a changed quality managing database 3001 is configured with a changed quality managing table as shown in FIG. 7. FIG. 7 is a schematic view illustrating the changed quality managing table. In the changed quality managing table, an IP address of a terminal 10, to which image data is sent, and a picture quality of the image data to be relayed by the repeating device 30 are associated to be managed.

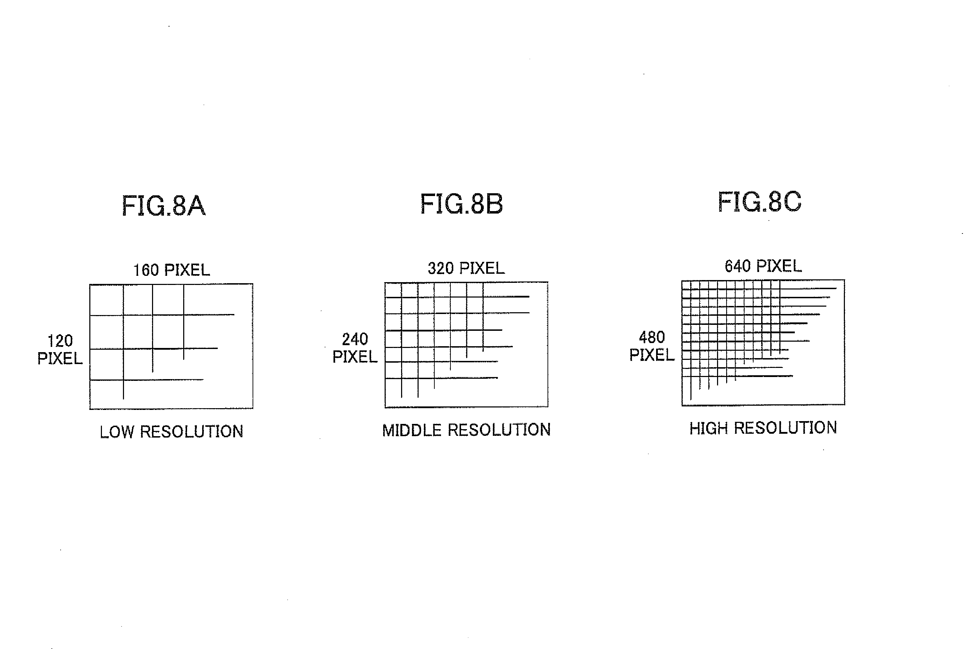

Here, resolution of image data in the present embodiment will be explained with reference to FIG. 8A-8C. FIGS. 8A-8C are schematic views illustrating picture qualities of image data. As shown in FIG. 8A, an image may be a low-resolution image with 160-pixel width and 120-pixel height, which is called a base image. Or, an image may be a middle-resolution image with 320-pixel width and 240- height shown in FIG. 8B, or a high-resolution image with 640-pixel width and 480-pixel height shown in FIG. 8C. When transferred through a narrow-bandwidth route, low-picture-quality image data is relayed, including only low-resolution images or base images. When the bandwidth of a route is relatively wide, low picture-quality image data is relayed, including low-resolution images or base images, and middle picture-quality image data including middle-resolution images. When the bandwidth of a route is very wide, relayed data may include low picture-quality image data including low-resolution images or base images, middle picture-quality image data including middle-resolution images, and high picture-quality image data including high-resolution images. For example, in the changed quality managing table in shown in FIG. 7, the repeating device 30 transmits a "high picture-quality" image to an IP address "1.3.2.4", which corresponds to the target terminal 10db.

### < Functional sections of repeating device >

Next, functional sections of the repeating device 30 will be explained in detail. In the following, when explaining functional sections of the repeating device 30, the elements shown in FIG. 4 which are relevant to implement the functional sections will be also explained.

The communicating section 31 in the repeating device 30 shown in FIG. 5D is implemented with the network I/F 209 shown in FIG. 4 to send/receive various data or information to/from the other terminals, devices, or systems via the communication network 2. The status detecting section 32 is implemented with instructions executed by the CPU 201 shown in FIG. 4 to detect a working status of the repeating device 30 including the status detecting section 32. A working status may be "online", "offline", or "out of order".

The data quality checking section 33 is implemented with instructions executed by the CPU 201 shown in FIG. 4. The data quality checking section 33 searches for a picture quality of image data in the changed quality managing table (see FIG. 7) in the changed quality managing database 3001 using an IP address of a target terminal 10 as a search key, to confirm the picture quality of the image data to be relayed. The changed quality managing section 34 is implemented with instructions executed by the CPU 201 shown in FIG. 4, to change contents of the changed quality managing table based on quality information sent from the management system 50, which will be described later. For example, suppose that a requesting terminal 10 with the terminal ID "01aa" (the terminal 10aa), and a target terminal ID "01db" (the terminal 10db) are holding a TV conference in which high picture-quality image data is sent/received. During the conference, if another requesting terminal 10bb and another target terminal 10ca start another TV conference, which causes a delay of receiving image data at the target terminal 10db, then it is necessary to downgrade the picture quality from high to middle. In such a case, based on the middle picture-quality information, contents of the changed quality managing table are changed so that the repeating device 30 downgrades the picture quality of relaying image data from high to middle.

The data quality changing section 35 is implemented with instructions executed by the CPU 201 shown in FIG. 4, to change picture quality of image data sent from a sending terminal 10, based on the changed contents of the changed quality managing table in the changed quality managing database 3001.

The store/read processing section 39 is implemented with the HDD 205 shown in FIG. 4, to store various data in the non-volatile memory section 3000, or to read various data in the non-volatile memory section 3000.

### < Functional configuration of management system >

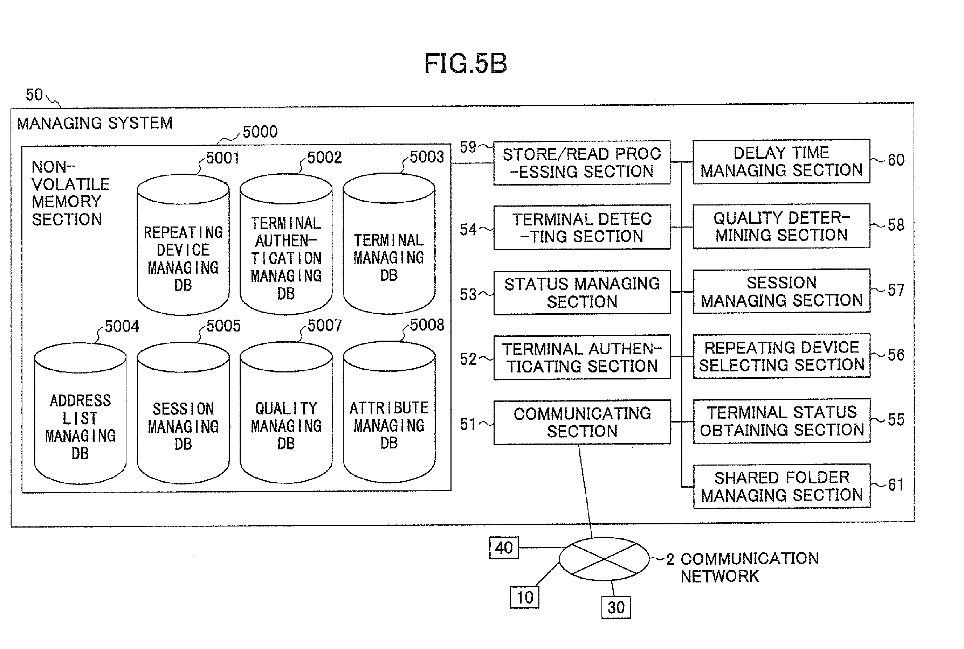

Next, functions and sections of the management system 50 will be explained. As shown in FIG. 5B, The management system 50 has a communicating section 51, a terminal authenticating section 52, a status managing section 53, a terminal detecting section 54, a terminal status obtaining section 55, a repeating device selecting section 56, a session managing section 57, a quality determining section 58, a store/read processing section 59, a delay time managing section 60, and a shared folder managing section 61. These sections are implemented with hardware elements shown in FIG. 4 and software programs stored in the ROM 202, which are executed by the CPU 201. Also, the management system 50 includes a non-volatile memory section 5000 implemented with the HD 204 shown in FIG. 4, which stores various data and information when the power of the management system 50 is off. The non-volatile memory section 5000 stores the address list frame 311-1 shown in FIG. 21.

### (Repeating device managing table)

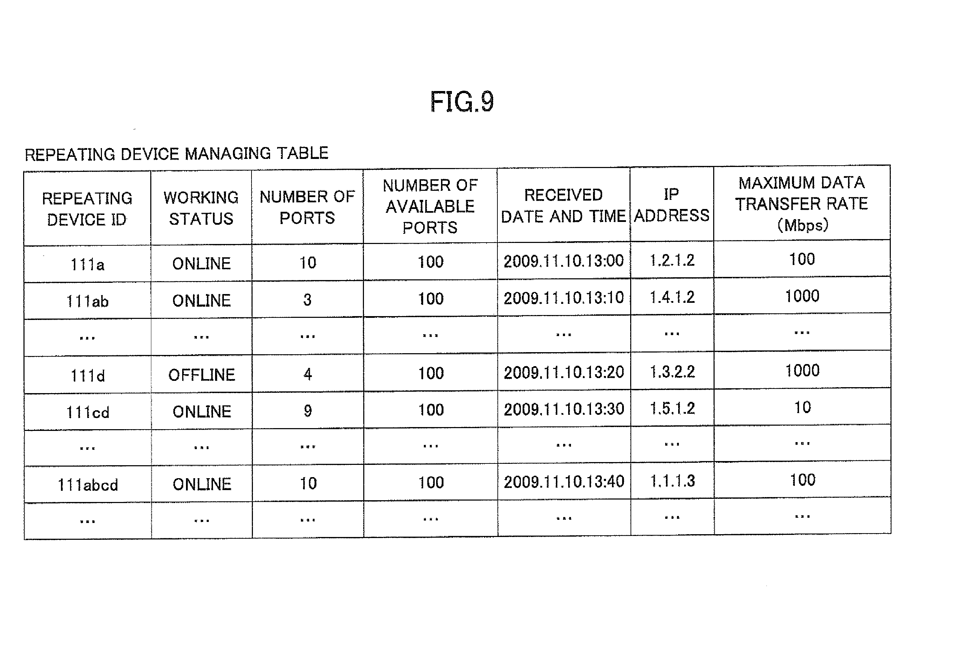

In the non-volatile memory section 5000, a repeating device managing database 5001 is configured with the repeating device managing table as shown in FIG. 9. FIG. 9 is a schematic view illustrating the repeating device managing table. In the repeating device managing table, for each of the repeating devices 30, the repeating device ID of the repeating device 30 is associated with a working status, the number of ports, the number of available ports, received date and time of status information including the working status received at the management system 50, the IP address of the repeating device 30, and the maximum data transmission rate (Mbps) of the repeating device 30, to be managed. For example, in the repeating device managing table shown in FIG. 9, the repeating device 30a with a repeating device ID "111a" is in a working status of "online". The number of ports is "10". The number of available ports is "100". Received date and time of status information including the working status received at the management system 50 is "2009.11.10.13:00". The IP address of the repeating device 30a is "1.2.1.2". The maximum data transmission rate (Mbps) of the repeating device 30a is 100 Mbps.

### (Terminal authentication managing table)

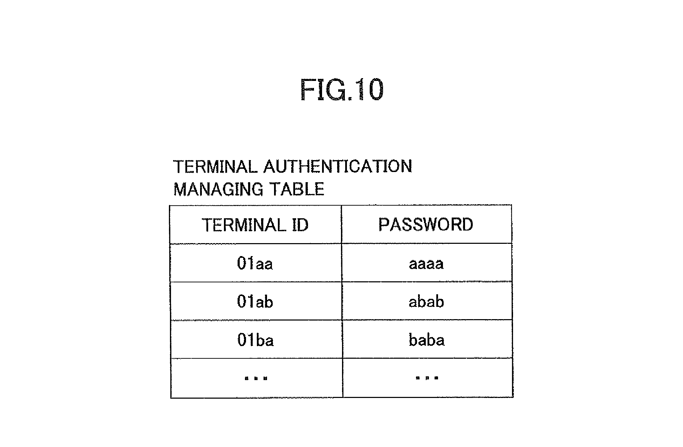

In the non-volatile memory section 5000, a terminal authentication managing database 5002 is also configured with a terminal authentication managing table as shown in FIG. 10. FIG. 10 is a schematic view illustrating the terminal authentication managing table. In the terminal authentication managing table, for each of the terminals 10 managed by the management system 50, the terminal ID of the terminal 10 is associated with a password, to be managed. For example, in the terminal authentication managing table shown in FIG. 10, the terminal 10aa has a terminal ID "01aa" and a password "aaaa".

### (Terminal managing table)

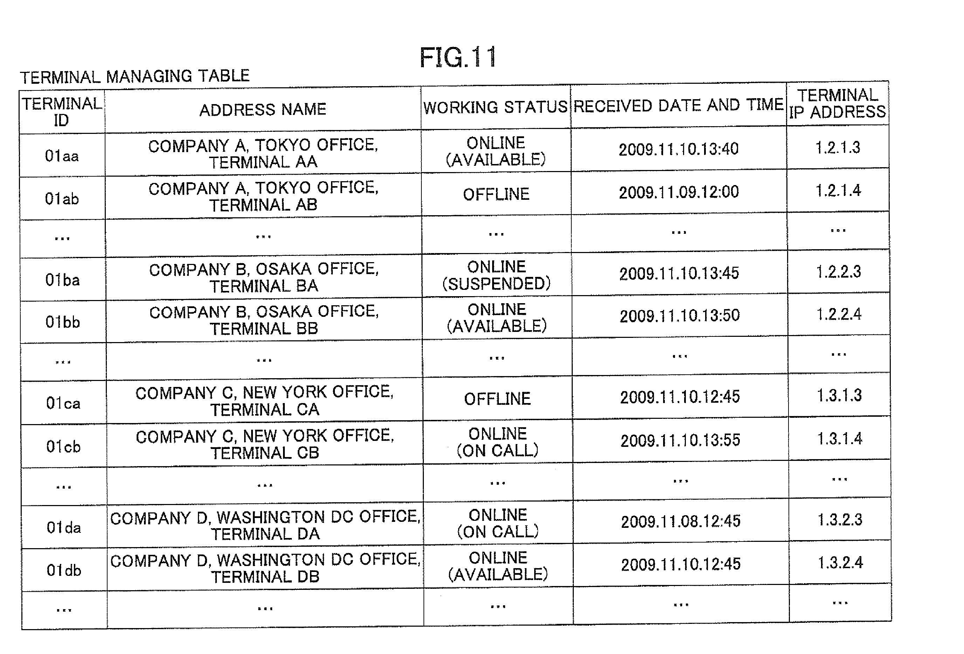

In the non-volatile memory section 5000, a terminal managing database 5003 is also configured with a terminal managing table as shown in FIG. 11. FIG. 11 is a schematic view illustrating a terminal managing table. In the terminal managing table, for each of the terminals 10, the terminal ID of the terminal 10 is associated with a terminal address name of the terminal 10, a working status of the terminal 10, received date and time of login request information, which will be described later, received at the management system 50, and the IP address of the terminal 10, to be managed. For example, in the terminal authentication managing table shown in FIG. 11, the terminal 10 aa with a terminal ID "01aa" has a terminal address name "COMPANY A, TOKYO OFFICE, TERMINAL AA". The working status is "online". The received date and time of login request information received at the management system 50 is "2009.11.10.13:40". The IP address of terminal 10aa is "1.2.1.3".

### (Address list managing table)

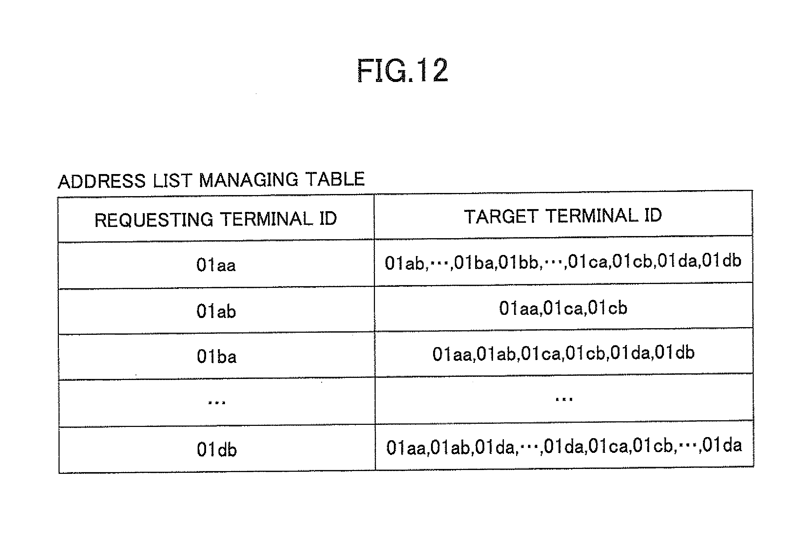

In the non-volatile memory section 5000, an address list managing database 5004 is also configured with an address list managing table as shown in FIG. 12. FIG. 12 is a schematic view illustrating an address listing managing table. In the address list managing table, for each requesting terminal that requests for a start call in a TV conference, the terminal ID of the terminal is associated with terminal IDs of all target terminals registered as candidate terminals, to be managed. For example, in the address list managing table shown in FIG. 12, the terminal 10aa with the terminal ID "01aa" may request for a start call in a TV conference with candidate target terminals 10ab with the terminal ID "01ab", 10ba with the terminal ID "01ba", 10bb with the terminal ID "01bb", etc. Candidate target terminals may be updated with a request to add/delete to the management system 50 from a requesting terminal.

### (Session managing table)

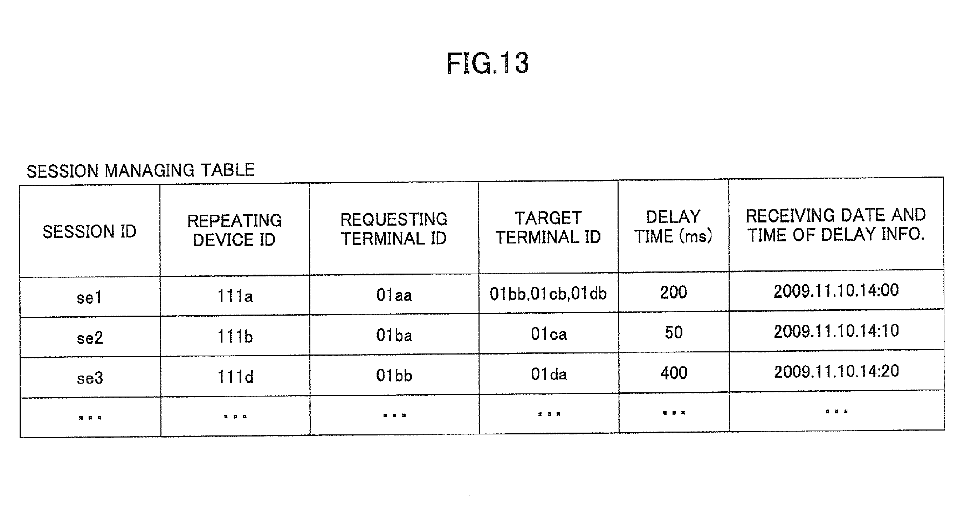

In the non-volatile memory section 5000, a session managing database 5005 is also configured with a session managing table as shown in FIG. 13. FIG. 13 is a schematic view illustrating a session management. In the session managing table, for each session in which contents data is communicated among terminals 10, a session ID of the session is associated with a repeating device ID of the repeating device 30 used to relay image and audio data, a terminal ID of a requesting terminal 10, terminal IDs of target terminals 10, a delay time (ms) to receive image data at a target terminal 10, and received date and time of delay information including the delay time received at the management system 50, the delay information being sent from a target terminal 10, to be managed. For example, in the session managing table shown in FIG. 13, a session with a session ID "se1" selects the repeating device 30a with a repeating device ID "111a". The repeating device 30a relays image and audio data between the requesting terminal 10aa with the terminal ID "01aa", 10bb with the terminal ID "01bb", 10cd with the terminal ID "01cb", and 10db with the terminal ID "01db". The delay time of image data is 200 ms at "2009.11.10.14:00". It is noted that when holding a TV conference between two terminals 10, received date and time of delay information from a requesting terminal 10 may be used instead of delay information from a target terminal 10. However, when holding a TV conference among three or more terminals 10, received date and time of delay information is managed with delay information sent from a target terminal 10 that receives image and audio data.

### (Quality managing table)

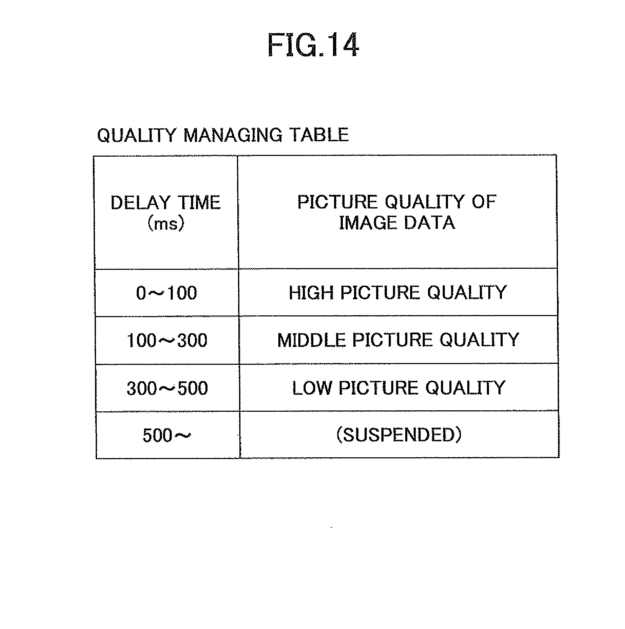

In the non-volatile memory section 5000, a quality managing database 5007 is also configured with a quality managing table as shown in FIG. 14. FIG. 14 is a schematic view illustrating a quality managing table. In the quality managing table, delay time (ms) of image data at a requesting terminal or a target terminal is associated with picture quality of image data relayed at the repeating device 30.

### (Attribute managing table)

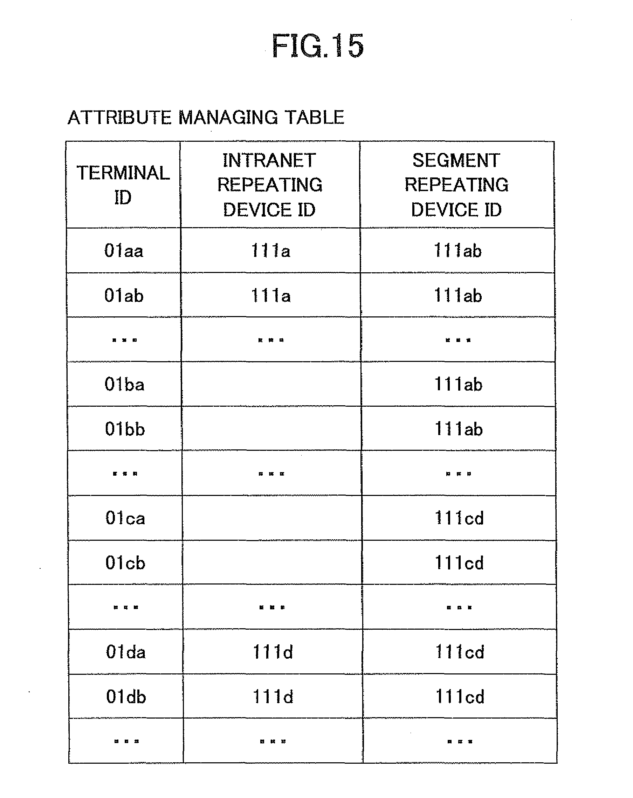

In the non-volatile memory section 5000, an attribute managing database 5008 is also configured with an attribute managing table as shown in FIG. 15. FIG. 15 is a schematic view illustrating an attribute managing table. In the attribute managing table, for each of the terminals 10 managed by the management system 50, the terminal ID of the terminal 10 is associated with first attribute information of the terminal 10 and second attribute information of the terminal 10, to be managed. The first attribute information includes, for example, an attribute of a predetermined communication network (intranet) to which the terminal 10 is connected. Specifically, the attribute is a repeating device ID to identify the repeating device 30 used to connect to the predetermined communication network (intranet), which will be called an "intranet repeating device ID", hereafter. The second attribute information is, for example, an attribute about an area where the terminal 10 is connected to the communication network 2. Specifically, the second attribute information is a repeating device ID to identify the repeating device 30 used to connect to the communication network 2 in the predetermined area, which will be called a "segment repeating device ID", hereafter. Namely, in the attribute managing table shown in FIG. 15, for each of the terminals 10, the terminal 10 is associated with an ID of the repeating device 30 which is assigned with priority to relay image data and audio data, to be managed.

### (Functional sections of management system)

Next, functional sections of the management system 50 will be described in detail with reference to FIG. 5B. In the following, when explaining functional sections of the management system 50, the elements shown in FIG. 4 which are relevant to implement the functional sections of the management system 50 will be also explained.

A communicating section 51 is implemented with the network interface 209 shown in FIG. 4, to send/receive various data or information to/from the other terminals, devices or systems of the communication network 2. A terminal authenticating section 52 authenticates a terminal 10 by determining a terminal ID and a password of the terminal 10 included in a terminal authentication management table (see FIG. 10). The terminal ID and password are included in the login requesting information received via the communicating section 51. The terminal ID and password are used as search keys to search for the terminal 10 in a terminal authentication management table in the non-volatile memory section 5000.

A status managing section 53 manages the working status of the requesting terminal which requested for a login, by associating the terminal ID of the requesting terminal 10 with the working status of the requesting terminal 10, the date and time when the login requesting information is received at the management the management system 50, and the IP address of the requesting terminal 10. The associated information is stored in the terminal authentication managing table in the terminal managing database 5003. Also, the status managing section 53 changes the working status from online to offline in the terminal managing table (see FIG. 11), based on status information sent from the terminal 10 when the user put off the power switch 109 of the terminal 10.

A terminal detecting section 54 uses the terminal ID of the requesting terminal 10 which requests for a login to search for the terminal IDs of candidate target terminals 10 which can make a call with the requesting terminal 10 in an address list managing table (see FIG. 12) in an address list managing database 5004. The terminal detecting section 54 also uses the terminal ID of the requesting terminal 10 which requests for a login to search for terminal IDs of other requesting terminals 10 which registers the terminal ID of the requesting terminal 10 above in the address list managing table (see FIG. 12) in the address list managing database 5004.

A terminal status obtaining section 55 uses the terminal ID of the candidate target terminal 10 extracted by the terminal detecting section 54 as a search key, to search for a working status of each of the candidate target terminals 10 in the terminal authentication managing table (see FIG. 11) . By doing so, the terminal status obtaining section 55 can obtain the working status of the candidate terminals 10 which can make a call with the requesting terminal 10 which requests for the login. Also, the terminal status obtaining section 55 uses the terminal ID of the candidate target terminal 10 extracted by the terminal detecting section 54 as a search key, to search for the working status of the requesting terminal 10 which requested for the login in the terminal managing table in the terminal managing database 5003.

A repeating device selecting section 56 selects a repeating device 30 to relay image and audio data for each session to communicate contents data among terminals 10. To select a repeating device 30, the repeating device selecting section 56 has a session ID generating section 56a, an address determining section 56b, an attribute extracting section 56c, an attribute determining section 56d, and a selecting section 56e, which are implemented with instructions executed by the CPU 201 shown in FIG. 4. FIG. 6 is a functional block diagram illustrating the repeating device selection section 56 in FIG. 5B in details.

The session ID generating section 56a generates a session ID to identify a session to communicate contents data among terminals 10. The target determining section 56b determines whether a terminal ID of a terminal 10 requesting for a TV conference and a terminal ID of a target terminal 10 are the same. The attribute extracting section 56c extract attributes corresponding to the terminal ID of the requesting terminal 10 and the target terminal 10 from the attribute managing table in the attribute managing database 5008 (see FIG. 15). The attribute determining section 56d determines whether the attributes of the terminals 10 extracted by the attribute extracting section 56c are the same. The selecting section 56e selects a repeating device 30 based on the attributes extracted by the attribute extracting section 56c.

The session managing section 57 associates the session ID generated at the session ID generating section 56a with the terminal ID of the requesting terminal 10 and the terminal ID of the target terminal 10, which is stored in the session managing table in the session managing database 5005 (see FIG. 13). The session managing section 57 also stores the ID of the repeating device 30 which is selected by the selecting section 56e in the session managing database 5005 (see FIG. 13).

A quality determining section 58 uses the delay time above as a search key to search for the corresponding picture quality of the image data in the quality managing table in the quality managing database 5007 (see FIG. 14), to determine the picture quality of image data to be relayed by the repeating device 30. A store/read processing section 59 is implemented with the HDD 205 shown in FIG. 4, to store/read various data in the non-volatile memory section 5000. A delay time managing section 60 uses the IP address of the target terminal 10 above as a search key to search for a corresponding terminal ID in a terminal managing table (see FIG. 11), and stores the delay time indicated by the above delay information into a field for a delay time in the record including the terminal ID extracted above, in the session managing table (see FIG. 13) in the session managing database 5005.

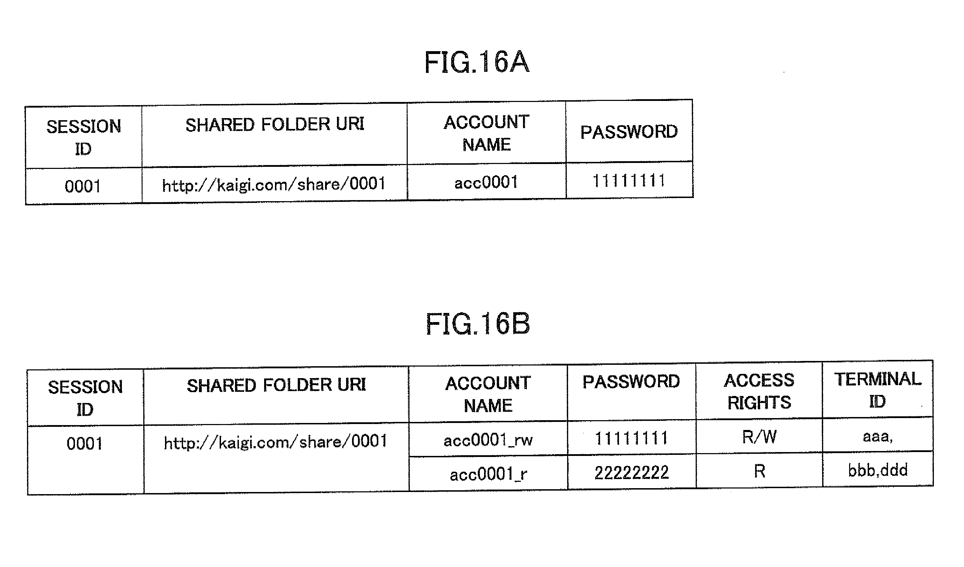

After the management system 50 establishes a session, a shared folder managing section 61 mainly executes the following operations:
- to have temporary storage for files 40 to generate the shared folder 47 to be shared by the terminals 10 participating the session.
- to generate a shared folders table 48 (see FIGS. 16A-16B), which will be described later, including a shared folder URI to designate a location of the shared folder 47, an account name, and a password.

An account name and a password are account information. Access controlling information is also registered in the shared folder table 48, which will be also described later.

The shared folder managing section 61 sends a record to the temporary storage for files 40 every time the record is generated in the shared folders table 48. The shared folder managing section 61 also sends the shared folder URI, account name, and password to the terminal 10 and the temporary storage for files 40.

### < Temporary storage for files >

Next, functional sections of the temporary storage for files 40 will be described in detail. The temporary storage for files 40 has a folder storing section 41, a shared folder generating section 42, an access controlling section 43, a file synchronizing section 44, a communicating section 45 and a file managing database 46 as shown in FIG. 5A.

### (Shared folder table)

FIG. 16A shows an example of a shared folder table 48 generated by the management system 50. The shared folder table 48 is sent to the temporary storage for files 40 to be stored in the file managing database 46. The same table is preserved at the management system 50 as a backup. The shared folder table 48 is configured in such a way that a session ID is associated with a shared fold URI, an account name, and a password. The session ID is obtained from the session managing table. The shared fold URI is generated by the shared folder managing section 61.

The shared fold URI is a URI description to designate the location of a shared folder 47. The example in FIG. 16A shows a shared folder 47 at "http://kaigi.com/share/0001" for a session (conference) whose session is 0001. It is noted that a URI often includes the URL of the temporary storage for files 40 or a part of the URL.

The account name is used by the temporary storage for files 40 to identify the terminal 10. The password is used for authenticating a terminal 10 when mounting the shared folder 47. The temporary storage for files 40 gives permission to mount the shared folder 47 if a pair of an account name and a password sent from the terminal 10 matches with a pair of an account name and a password registered in the shared folder table 48.

The terminals 10 may be given an access right to read/write a file in the shared folder 47. Namely, every terminal 10 has an access right to read/write a file potentially. An access right may be restricted to an individual read/write.

FIGS. 16B-16C are other examples of the shared folder table 48, which will be described later.

The folder storing section 41 is implemented with the HD 204 shown in FIG. 4, as a resource to store the shared folder 47. Namely, the above URI designates the folder storing section 41.

Once obtaining a request for generating a shared folder 47 from the shared folder managing section 61, the shared folder generating section 42 generates a shared folder 47 for each session independently. A folder is often called a directory. In that case, a shared directory is generated. The shared folder generating section 42 deletes the shared folder 47 after the conference ends. In many cases, a single shared folder 47 is generated for a single session. In some cases, multiple shared folders 47 are generated for a single session.

The access controlling section 43 determines whether a terminal 10 has an access right to write, with referring to the shared folder table 48. The access controlling section 43 also determines whether a terminal 10 has an access right to read, with referring to the shared folder table 48.

The file synchronizing section 44 communicates with the file synchronizing section 24 in the terminal 10 to manage file sharing so that a file in the shared folder 47 mounted on the terminal 1 is accessible from the terminal 2. Namely, a file stored in the shared folder 47 can be displayed or opened by the PC 120 connected to the terminal 2. It is noted that the contents of the file exist in the temporary storage for files 40. Only the file name of the file and its icon are held by the terminals 10.

Namely, a file written in the terminal 10 by the PC 120 is uploaded to the shared folder 47 by the file synchronizing section 24 of the terminal 10 communicating with the file synchronizing section 44. The file is not left in the terminal 10. The file synchronizing section 44 of the temporary storage for files 40 sends the file name to other terminals 10 participating in the session. Therefore, every terminal (or PC) in the session can refer to the file name, and can read the file if the terminal has a read permission.

It is noted that the file synchronizing section 24 of the terminal 10 and the file synchronizing section 44 of the temporary storage for files 40 share a file by using a protocol such as SMB (Server Message Block) or CIFS (Common Internet File System). File sharing is realized when a device connected via a network makes a request for a file to a file system of another device, and obtains a response. For example, if a device requests a file from another device, then the requested device reads the file to send to the requesting device. Alternatively, if a device sends a file to another device, then the receiving device writes the file, and indicates the write to the sending device.

When the file synchronizing sections 24 and 44 share a file with SMB, an SMB service is called. SMB provides file sharing as a client-server type service, in which a client request for a service to be provided by a server. In the present embodiment, the temporary storage for files 40 may be a server or a client, and vice versa, the terminal 10 may be a server or a client. Therefore, the terminal 10 and the temporary storage for files 40 have both client and server services. It is noted that as a protocol for file sharing, WebDAV, NFS (Network File System) or the like may be used.

### < PC >

Next, functiona1 sections of the PC 120 will be described in detail. The PC 120 has a similar hardware configuration as that of the management system 50, which will not be explained here. In many cases the PC 120 is a personal computer, although it can be a tablet terminal, a smart phone, a cellphone, or any other information processing device having a display.

As shown in FIG. 5C, the PC 120 has an operation receiving section 71, a file operating section 72, a file database 73, and a communicating section 74. The communicating section 74 is implemented with the external device connecting I/F 215 shown in FIG. 4, to send/receive a file to/from the terminal 10. The communicating section 74 is, for example, a USB interface, a Bluetooth host, a wireless LAN, or the like.

The file database 73 is implemented with the HD 204 shown in FIG. 4, to store various files. A file may be a data file generated by an application such as a document file, a presentation file, a spread sheet file, etc., or an execution file of an application, such as *.exe, *.dll, etc.

The operation receiving section 71 is implemented with a keyboard 211 and a mouse 212 shown in FIG. 4, to receive an operation at the PC 120 from a participant. Since the PC 120 recognizes the terminal 10 or the mount drive 22 as a storage device, the operation receiving section 71 can receive the following operations from the participant.
- to copy a file in the file database 73 to the terminal 10
- to move or paste a file in the file database 73 to the terminal 10
- to delete a file in the terminal 10

The file operating section 72 applies an operation to a file when the operation receiving section 71 receives the operation. For example, if a participant copies a file in the file database 73 to the terminal 10, the file operating section 72 sends the file in the file database 73 to the terminal 10 via the communicating section 74. The PC communicating section 21 of the terminal 10 stores the received file in the mount drive 22. The display 208 of the PC 120 shows the file name of the file copied to the mount drive 22 of the terminal 10.

### « Operations of the present embodiment »

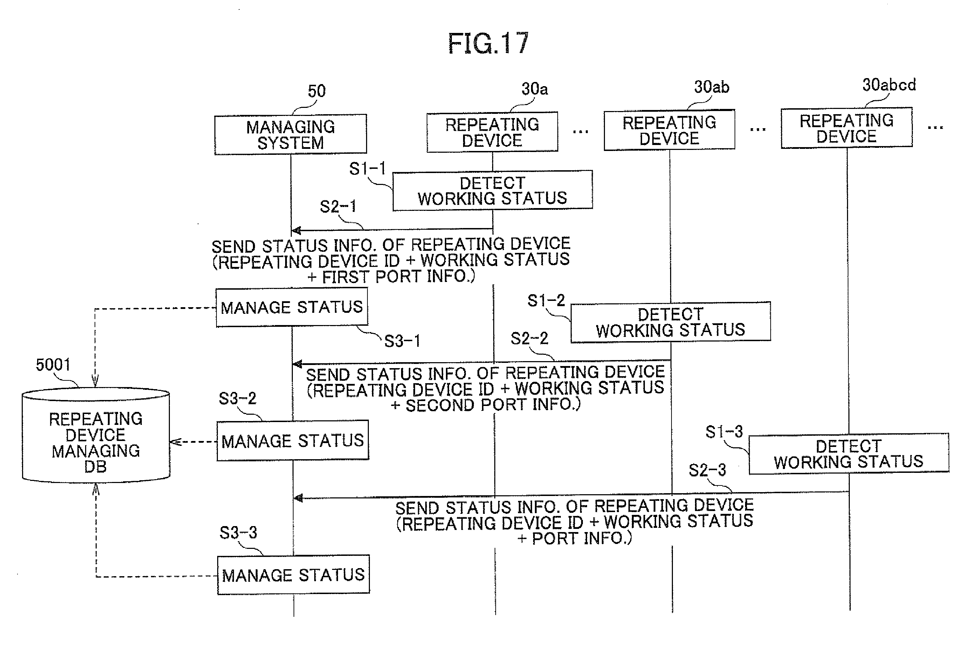

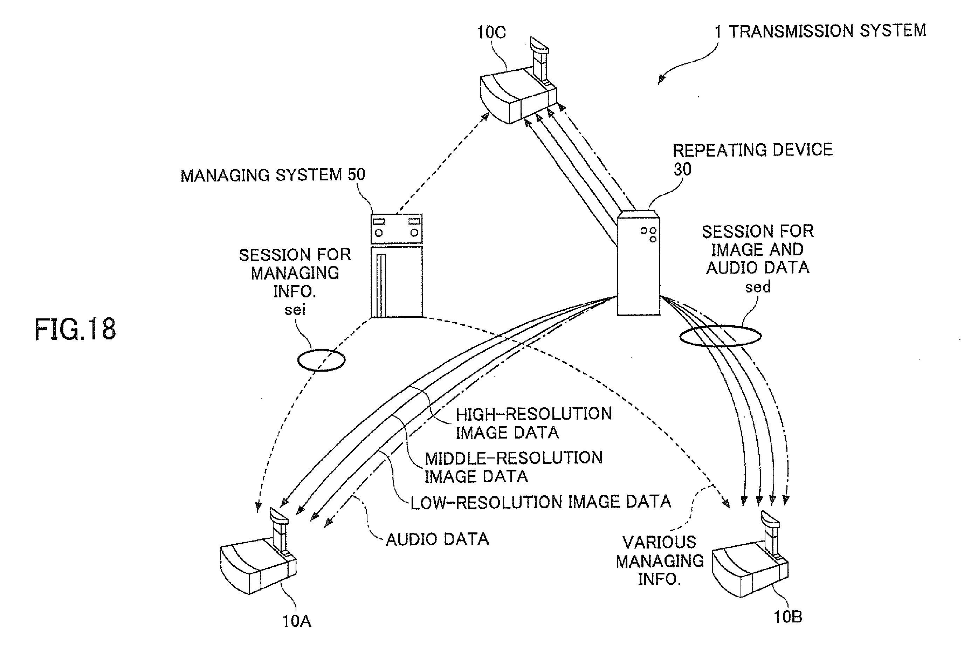

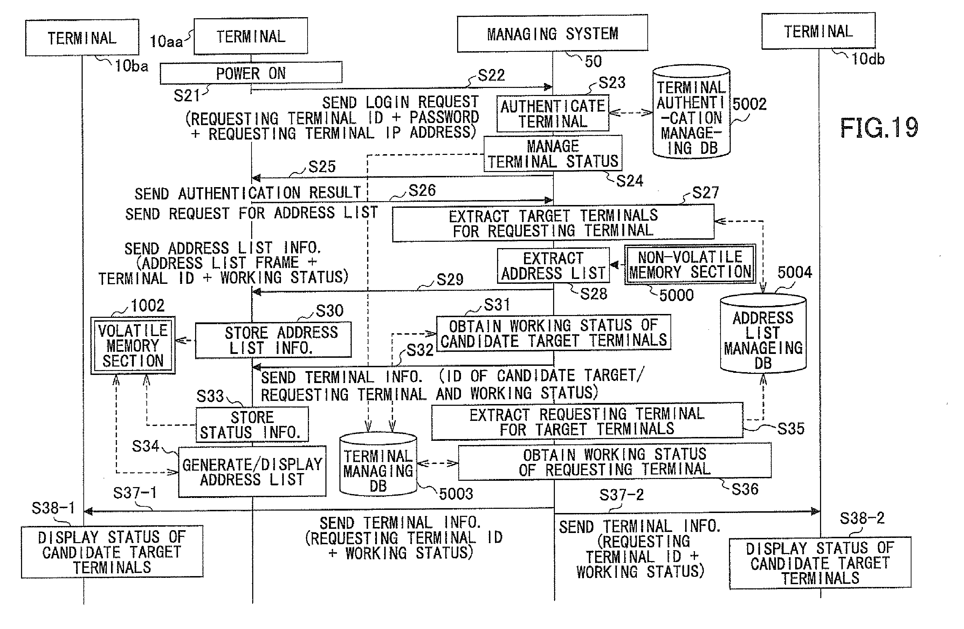

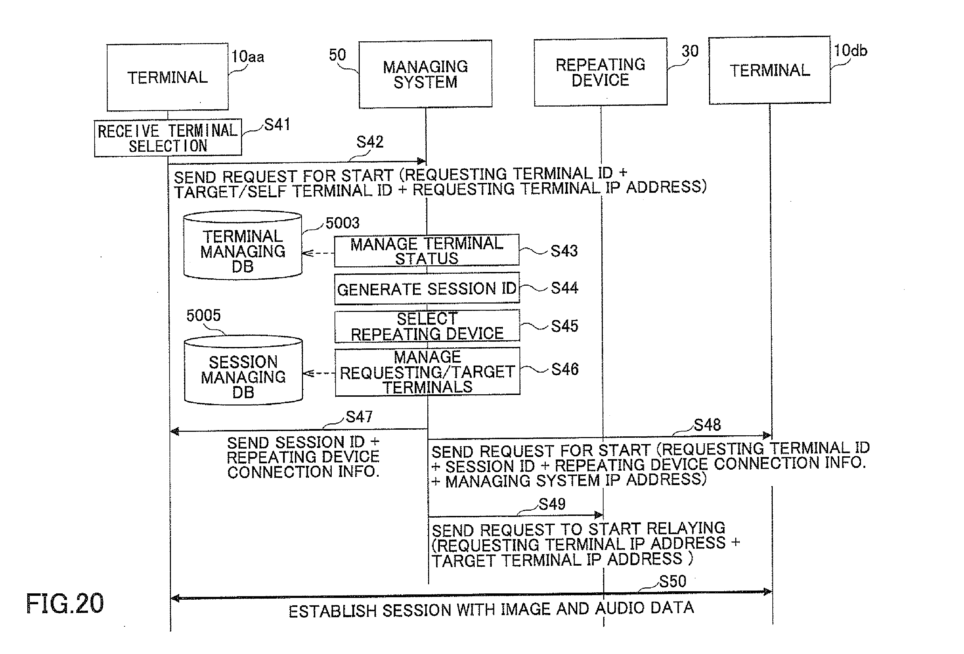

Having explained the configuration and functions of the transmission system 1 according to the present embodiment, operations of the transmission system 1 according to the present embodiment will be explained with reference to FIGS. 17-20. FIG. 17 is a sequence chart illustrating a procedure to manage status information indicating working statuses of repeating devices 30. FIG. 18 is a schematic view illustrating transmitting status of image data, video data, and various items of managing information. FIG. 19 is a sequence chart illustrating a preparation procedure to start up a call between transmission terminals 10. FIG. 20 is a sequence chart illustrating a selection procedure of the repeating device 30. FIG. 21 is a schematic view illustrating an address list according to an embodiment.

First, with reference to FIG. 17, operations to manage status information showing statuses of the repeating devices 30 will be described. The statuses are sent to the management system 50 from the repeating device 30. Each of the repeating devices 30 detects its working status periodically using the status detecting section 32 shown in FIG. 5, at Steps S1-1 to S1-3. The status detecting section 32 detects the number of available ports and the number of used ports communicating with the terminals 10 in the repeating device 30. The communicating section 31 of each of the repeating devices 30 periodically sends the status information to the management system 50 via the communication network 2 so that the management system 50 can manage the working statuses of the repeating devices 30 in real time, at Steps S2-1 to S2-3. The status information includes the repeating device ID of the repeating device 30 and the working status detected by the status detecting section 32 of the repeating device 30 having the repeating device ID. The status information also includes port information including the number of available ports and the number of used ports mentioned above.

At Steps S2-1 to S2-3, if the repeating device 30 sends the above status information via a firewall, it is desirable that the repeating device 30 use secure communication to ensure security. Here, secure communication means that communication is executed in such a way that contents of the communication cannot be understood by a third party. Technologies for secure communication include TLS (Transport Layer Security), SSL (Secure Sockets Layer), communication with a tunneling service, or the like. For example, in the transmission system in FIG. 1A, the communicating section 31 of the repeating devices 30a and 30d in the intranet can send the status information to the management system 50 with SSL. Also, the communicating section 31 of the repeating the repeating device 30a and 30d can map the communication to secure ports if SSL communication is not available. The mapping may be executed with a publicly known tunneling service, for example, Stunnel (multiplatform SSL tunneling proxy). Specifically, the communicating section 31 can establish a secure connection with the management system 50 by mapping an SSL port to a port of a mail server.

Next, the communicating section 51 of the management system 50 receives the status information from the repeating device 30. If the communication is mapped, the communicating section 51 can receive the status information via a tunneling service of the management system 50. The management system 50 stores each of the items of received status information of each of the repeating devices 30 in the repeating device managing table in the non-volatile memory section 5000 via the store/read processing section 59 (see FIG. 9), to manage, at Steps S3-1 to S3-3. With these operations, the repeating device managing table shown in FIG. 9 stores the working status to be managed for each of the repeating device IDs, which is one of "online", "offline", and "out of order". The repeating device managing table also stores the port information to be managed for each of the repeating device IDs including the number of available ports and the number of used ports. In addition, the repeating device managing table also stores the received data and time of the status information received at the management system 50 to be managed for each of the repeating device IDs. It is noted that if the status information is not sent from the repeating device 30, fields for the working status or the received data and time of a record in the repeating device managing table shown in FIG. 9 are left blank or left with the working status and receive date and time received at a previous time.

Next, with reference to FIG. 18, a conceptual description will be given about statuses of sending/receiving image data, audio data, and various managing information in the transmission system 1. As shown in FIG. 18, in the transmission system 1, a session called "sei" is established among the terminals 10A, 10B and 10C for sending/receiving managing information via the management system 50. Also among the terminals 10A, 10B and 10C, via the repeating device 30, four sessions are established for sending/receiving high-resolution image data, middle-resolution image data, low-resolution image data, and audio data. These four sessions are bundled shown as an image and audio data session called "send".

Next, with reference to FIG. 19, send/receive operations will be described, in which managing information is exchanged for preparation before starting a call between the terminal 10aa and 10db. It is noted that in FIG. 19, various managing information is sent/received with the session "sei".

First, when a user at the terminal 10aa puts on the power switch 109 shown in FIG. 3, the input operation receiving section 12 shown in FIG. 5C receives the power-on operation to put the power source on, at Step S21. Then, the login requesting section 13, in response to receiving the above power-on operation, automatically sends login request information to the management system 50 from the communicating section 11 via the communication network 2, at Step S22. The login request information includes a terminal ID to identify the terminal 10aa itself as a requesting terminal, and a password. The terminal ID and password are data read from the non-volatile memory section 1000 via the store/read processing section 19 to send to the communicating section 11. It is noted that when sending login request information from the terminal 10aa to the management system 50, the management system 50 receiving the information can recognize the IP address of the sending terminal 10aa.

Next, the terminal authenticating section 52 of the management system 50, upon receiving the login request information via the communicating section 51, searches the terminal authentication managing table in the non-volatile memory section 5000 (see FIG. 10) for the terminal ID and password included in the received login request information as search keys, to authenticate the terminal by determining the same terminal ID and password are managed in the authentication managing database 5002, at Step S23.

If the terminal authenticating section 52 finds the same terminal ID and password under its management, the terminal authenticating section 52 determines the login request is a valid request from a terminal 10 with a proper access right. Then, the status managing section 53 associates the working status, the receive date and time of the login request information above, with the IP address of the terminal 10aa, then stores the associated data in a record designated with the terminal ID of the terminal 10aa and the terminal address name, in the terminal managing table in the terminal managing database 5003 (see FIG. 11), at Step S24. With these operations, the terminal managing table shown in FIG. 11 stores the associated data which includes the terminal ID "01aa", the working status "ONLINE", the receive date and time "2009.11.10.13 : 40" and the terminal IP address "1.2.1.3".

Then, the communicating section 51 of the management system 50 sends the authentication result obtained at the terminal authenticating section 52 as above, back to the requesting terminal (the terminal 10aa) via the communication network 2, at Step S25.

Next, operations following a successful authentication at the terminal authenticating section 52 will be described. Receiving the authentication result in which the terminal 10aa is determined to have a proper access right, the communicating section 11 of the terminal 10aa sends a request for address list information to the management system 50 via the communication network 2, at Step S26. With this operation, the communicating section 51 of the management system 50 receives the address list request information.

Next, the terminal detecting section 54 uses the terminal ID "01aa" of the login requesting terminal (the terminal 10aa) as a search key to search for terminal IDs of candidate target terminals in the address list managing table in the address list managing database 5004 (see FIG. 12), to extract candidate target terminals that can make a call with the requesting terminal (the terminal 10aa), at Step S27. Then, the terminal detecting section 54 uses each of the extracted terminal IDs as a search key to search for a target terminal address name associated with the terminal ID in the terminal managing table in the terminal managing database. Here, the terminal ID "01aa" of the requesting terminal (the terminal 10aa) is associated with target terminals 10ab, 10ba, 10bb, etc., corresponding to terminal IDs "01ab", "01ba", "01bb", etc., and terminal address names "COMPANY A, TOKYO OFFICE, TERMINAL AB", "COMPANY B, OSAKA OFFICE, TERMINAL BB", etc., respectively, which are extracted.

Next, the communicating section 51 of the management system 50 reads data in the address list frame in the non-volatile memory section 5000 (data in the address list frame 311-1 shown in FIG. 21) via the store/read processing section 59, at Step S28. Then, the communicating section 51 sends address list information including the address list frame, the terminal ID and terminal address names extracted at the terminal detecting section 54, to the requesting terminal (the terminal 10aa), at Step S29. With these operations, at the requesting terminal (the terminal 10aa), the communicating section 11 receives the address list information, and the store/read processing section 19 stores the address list information in the volatile memory section 1002, at Step S30.

As described above, in the present embodiment, each terminal 10 does not manage the address list information individually, but the management system 50 manages all the address list information for terminals as a whole. Therefore, if a new terminal 10 is added to the transmission system 1, or an existing terminal 10 is replaced with a new model terminal 10, or appearance of the address list is changed, each terminal 10 does not need to take care of updating the address list information, because the management system 50 updates the address list information as a whole.

The terminal status obtaining section 55 of the management system 50 uses terminal IDs ("01ab", "01ba", "01bb", ...) of candidate target terminals extracted at the terminal detecting section 54 as search keys, to search for a working status for each of the candidate target terminals 10ab, 10ba, 10bb, etc., in the terminal managing table (see FIG. 11), at Step S31.

Next, the communicating section 51 sends the terminal ID "01ab" used as the search key at Step S27, and the status information including the working status of the corresponding target terminal (the terminal 10ab), which is "ONLINE (AVAILABLE)", to the requesting terminal (the terminal 10aa) via the communication network 2, at Step S32. Also at Step 32, the communicating section 51 sends the terminal ID "01ba", and the status information including the working status of the corresponding target terminal (the terminal 10ba), which is "ONLINE (SUSPENDED)", and the terminal IDs and the status information of the other terminals, to the requesting terminal (the terminal 10aa).

Next, the store/read processing section 19 of the requesting terminal (the terminal 10aa) stores in order the status information of the terminals received from the management system in the volatile memory section 1002, at Step S33. Thus, by receiving the status information of the terminals, the requesting terminal (the terminal 10aa) can obtain the working status of the candidate target terminals that can make a call with the requesting terminal (the terminal 10aa) at the moment.

Next, the address list generating section 20 of the requesting terminal (the terminal 10aa), based on the address list information and the status information of the terminal stored in the volatile memory section 1002, generates an address list reflecting the status information of the candidate target terminals 10. The display controlling section 16 controls a timing to display the address list on the display 120 shown in FIG. 3, at Step S34.

Thus, as shown in FIG. 21, the address list frame 311-1 with the terminal address names 311-2, and the icons 311-3a, 3b, and 3c reflecting the status information, is shown on the display 120aa.

Back to FIG. 19, the terminal detecting section 54 of the management system 50 uses the terminal ID "01aa" of the login requesting terminal (the terminal 10aa) as a search key to search for terminal IDs of other requesting terminals that have the login requesting terminal (the terminal 10aa) registered as a candidate target terminal in the address list managing table in the address list managing database 5004 (see FIG. 12), at Step S35. In the address list managing table shown in FIG. 12, terminal IDs of the other requesting terminals are "01ab", "01ba", and "01db".

Next, the terminal status obtaining section 55 of the management system 50 uses the terminal ID "01aa" of the login requesting terminal (the terminal 10aa) as a search key to search for a working status of the login requesting terminal (the terminal 10aa) in the terminal managing table in the terminal managing database 5003 (see FIG. 11) to obtain the working status of the login requesting terminal (the terminal 10aa), at Step S36.

The communicating section 51, then, sends terminal status information including the terminal ID "01aa" of the login requesting terminal (the terminal 10aa) and the working status "ONLINE" obtained at Step S36, to terminals 10ba and 10db whose working status is "ONLINE" in the terminal managing table in the terminal managing database 5003 (see FIG. 11) among the terminals 10ab, 10ba, and 10db corresponding to the terminal IDs "01ab", "01ba", and "01db" extracted at Step S35, at Steps S37-1 and S37-2. It is noted that when the communicating section 51 sends the terminal status information to the terminals 10ba and 10db the communicating section 51 refers to the IP addresses of the terminals managed in the terminal managing table based on the terminal IDs ("01ba", "01db"). With these operations, it is possible to send the terminal ID "01aa" of the login requesting terminal (the terminal 10aa) and its working status of "ONLINE", to the other target terminals 10db and 10ba which can make a call to the login requesting terminal (the terminal 10aa) as a target terminal.

On the other hand, other terminals 10 execute similar operations as at Step S21 above, in which when a user puts on the power switch 109 shown in FIG. 3, the input operation receiving section 12 shown in FIG. 5 receives the power-on operation to put the power source on, followed by similar operations as at Steps S22 to S38-1/2. Explanation of these operations is skipped.

Next, with reference to FIG. 20, operations for a terminal to start communication with other terminals will be described. It is noted that in FIG. 20, various managing information is sent/received with the session "sei". In the present embodiment, a requesting terminal (the terminal 10aa) can select a candidate target terminal 10 from at least one of the terminals 10 whose working status is online, or the terminal itself (the terminal 10aa), to make a request to start communication. It is noted that to select the terminal itself (the terminal 10aa) means that the requesting terminal (the terminal 10aa) requests to connect only the terminal itself to the repeating device 30. In the following, requesting operations to start communication will be explained.

First, a user at the requesting terminal (the terminal 10aa) pushes one of the operation buttons 108 shown in FIG. 3 to select a target terminal (the terminal 10db is assumed here), the input operation receiving section 12 shown in FIG. 5 receives a request to start a call, at Step S41. The communicating section 11 of terminal 10aa sends start requesting information including the terminal ID of the terminal 10aa and the terminal ID of the selected target terminal 10, to the management system 50, at Step S42. With this operation, the communicating section 51 of the management system 50 receives the start requesting information and obtains the IP address of the request sending terminal 10aa.

Then, the status managing section 53, based on the terminal ID of the requesting terminal (the terminal 10aa) included in the start request information, changes a field for a working status to show "ONLINE (ON CALL)" in records including the above terminal IDs in the terminal managing table of the terminal managing database 5003 (see FIG. 11), at Step S43. It is noted that in this stage, the terminals 10aa and 10db have not yet started a call, but in the status of "ONLINE (ON CALL)", which is output in a sound or an image if another terminal attempts to make a call to the terminals 10aa and 10db.

Next, the management system 50 executes operations to select the repeating device 30. In this case, the repeating device selecting section 56a first generates a session ID called "se1" to identify the session for image and audio data called "sed" which executes communication between the requesting terminal (the terminal 10aa) and the target terminal 10, at Step S44.

Next, the repeating device selecting section 56 of the management system 50 selects a repeating device 30 to relay a call between the requesting terminal (the terminal 10aa) and the target terminal 10, based on the repeating device managing database 5001, at Step S45.

Having completed the selection of the repeating device 30, the session managing section 57 stores the session ID "se1" generated at Step S44 above, the terminal ID of the requesting terminal (the terminal 10aa), the terminal ID of the target terminal (the terminal 10db), and the repeating device ID of the selected repeating device 30 in the session managing table in the session managing database 5005 in the non-volatile memory section 5000 (see FIG. 13), to be managed, at Step S46.

Next, the communicating section 51 shown in FIG. 5 sends the session ID generated at the session ID generating section 56a and repeating device connecting information to connect to the repeating device 30 selected at the repeating device selecting section 56e, to the requesting terminal (the terminal 10aa) via the communication network 2, at Step S48. The repeating device connecting information may include the IP address of the repeating device 30, authentication information, port numbers, etc. Thus, the requesting terminal (the terminal 10aa) can obtain the repeating device connecting information to connect to the repeating device 30 to relay image and audio data when executing the session with the session ID "se1".

Next, the communicating section 51 sends the terminal ID of the requesting terminal (the terminal 10aa), the start requesting information including the session ID "se1", the repeating device connecting information to connect to the repeating device 30, and the IP address of the management system 50, to the target terminal (terminal 10db), at Step S48. With this operation, the communicating section 51 of the management system 50 receives the start requesting information and obtains the IP address of the request sending terminal 10aa. Thus, the communicating section 51 of the terminal 10db receives the start requesting information to obtain the repeating device connecting information to connect to the repeating device 30 to relay contents data, and the IP address of the management system 50 "1.1.1.2".

Next, the communicating section 51 of the management system 50 sends request information to start relaying to the selected repeating device 30 via the communication network 2, at Step S49. The request information to start relaying includes the IP addresses of the requesting terminal (the terminal 10aa) and the target terminal (the terminal 10db) to which contents data is to be relayed. With these operations, the repeating device 30 establishes the image and audio session "sed" between the terminals 10, to communicate three levels of image data with low resolution, middle resolution, and high resolution, and audio data, at Step S50. Thus, the terminals 10 can start a TV conference.

### << Example 1 >>

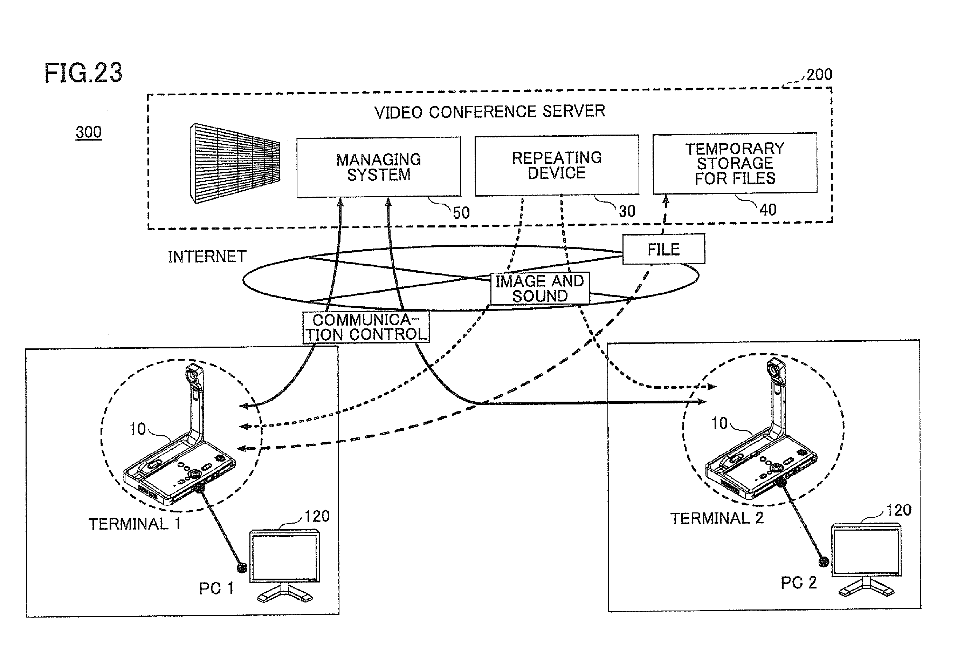

FIG. 23 is an example of an overall configuration diagram of an electronic conference system 300. The electronic conference system 300 has a video conference server 200, and two or more pairs of a terminal 10 and a PC 120. The server 200 has a management system 50, a repeating device 30, and a temporary storage for files 40. The management system 50 and the repeating device 30 have been explained already. The management system 50, the repeating device 30, and, the temporary storage for files 40 do not need to be implemented in physically separated information processing devices, but may be implemented in a single information processing device. In the present example, the information processing device is called the server 200.

As explained, the management system 50 controls communication, for example, to establish a session among terminals. The repeating device 30 relays image and audio data with selecting a route to optimally transmit the data. The temporary storage for files 40 makes it possible to share files between the terminals.

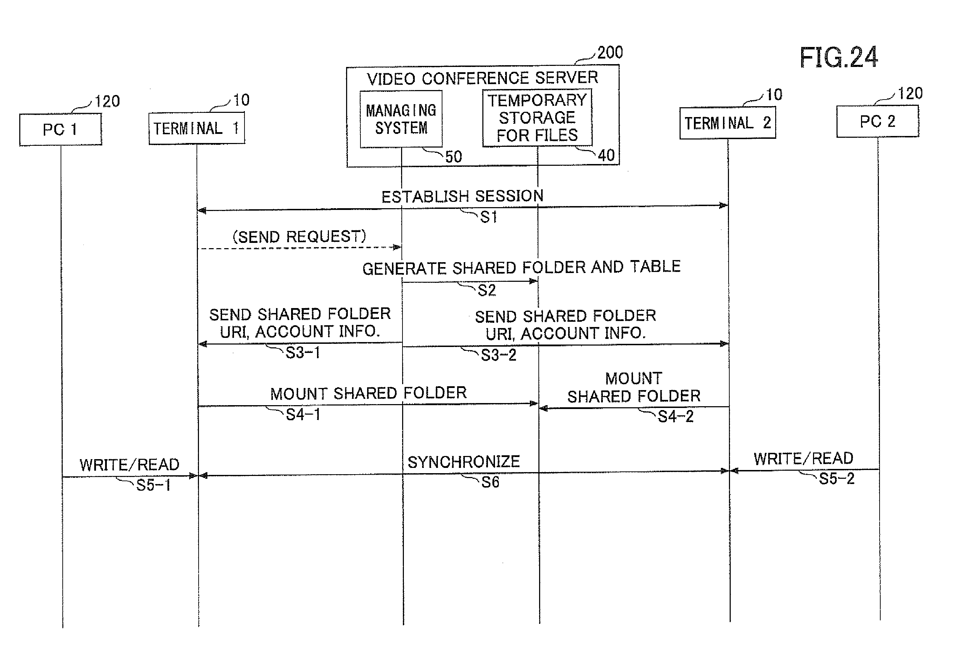

FIG. 24 is an example of a sequence chart illustrating a procedure to send/receive files between terminals in the electronic conference system 300.

### S1. Establish a session

A session is established between a terminal 1 and a terminal 2 with the procedure described earlier.

### S2. Generate shared folder and table

The shared folder managing section 61 of the management system 50 has the temporary storage for files 40 generate a shared folder 47, and generates a shared folder table 48, for example, after Step S47, 48. Since the management system 50 does not recognize the URI of the shared folder 47, the URI is indicated by the temporary storage for files 40. The shared folder generating section 42 of the temporary storage for files 40 generates the shared folder 47 whose URI is sent to the management system 50.

The shared folder managing section 61 of the management system 50 sends the shared folder table 48 including the shared folder URI to the temporary storage for files 40.

Alternatively, the management system 50 may generate the shared folder URI beforehand. Namely, the shared folder managing section 61 generates the shared folder URI, for example, by adding the session ID to the URL of the temporary storage for files 40. By indicating the shared folder URI to the temporary storage for files 40 as the shared folder table 48, the shared folder generating section 42 generates a shared folder 47 at the shared folder URI.

It is noted that the temporary storage for files 40 updates the shared folder table 48 in the file managing database 46 by adding a record to the shared folder table 48.

When the management system 50 generates the shared folder table 48 as above, the management system 50 also generates account information (an account name and a password) . Terminals 10 have read/write access rights unless explicitly restricted by the management system 50.

It is noted that in FIG. 24, although the management system 50 automatically generates the shared folder 47 after establishing the session, the management system 50 may generate the shared folder 47 in response to a request from the terminal 1 or 2, as shown in a dashed line in FIG. 24. Thus, it can be avoided to waste resources or workload to provide a shared folder 47 in a conference that does not use a shared folder 47.

Terminals may make a request for the shared folder table 48 when mounting a mount drive 22.

### S3-1/3-2. Indicate shared folder URI and account information

Having generated the shared folder 47 at the temporary storage for files 40, the shared folder managing section 61 indicates the shared folder URI and the account information to terminals participating in the conference.

### S4-1/4-2. Mount the shared folder

The folder mounting section 23 of the terminal 1 or 2 mounts the shared folder 47 on the terminal 1 or 2. For example, when using SMB, a mount command is as follows. Although protocols other than SMB may have a different name or format for a mount command, mounting is possible anyway. mount shared_folder_URI account_name password path_name_to_ mount

With the command, the file synchronizing section 24 and the file synchronizing section 44 communicate to mount the shared folder 47 to the designated "path_name_to_ mount" in the terminal 1 or 2. The file synchronizing section 44 manages the shared folder 47 by associating the mounted account name of the terminal 1 or 2, with the shared folder URI. It is noted that multiple terminals may assigned the same account name since the shared folder 47 is managed with an account name.

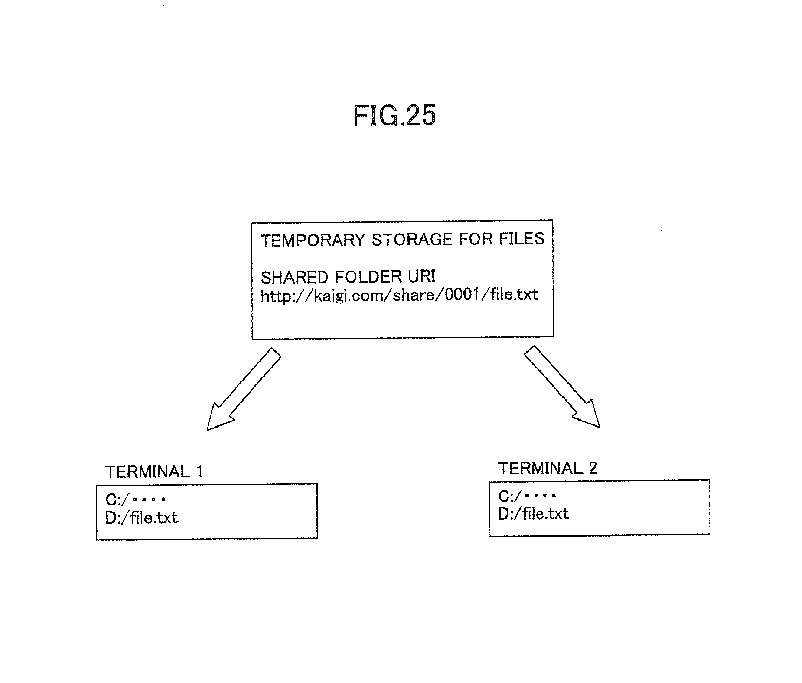

FIG. 25 is an example of a schematic view illustrating mounting of the shared folder 47. Suppose that the shared folder URI of the temporary storage for files 40 is "http://kaigi.com/share/0001".

Since the terminals 1 and 2 have specified the URI to mount the shared folder 47, the shared folder 47 is mounted on the terminals 1 and 2. For example, the terminals 1 and 2 specify D drive for mounting, and the shared folder 47 is mounted as D drive.

If a file "file.txt" is stored in the shared folder 47 of the temporary storage for files 40, the file synchronizing sections 24 and 44 communicate to make the file name of "file.txt" visible in D drive of the terminals 1 and 2. The contents of the file exist in the shared folder 47.

### S5-1/5-2. Write/Read

The PC 1 or 2 writes, for example, a file in D drive. Suppose that the PC 1 writes a file.

### S6. Synchronize

The file synchronizing section 24 detects the write in D drive, to send the file to the shared folder 47 of the temporary storage for files 40. Then, the file synchronizing section 44 stores the file in the shared folder 47, and sends the file name to the terminal 2 that has mounted the shared folder 47 with the terminal 1. The same file name is visible in D drive of the terminals 1 and 2.

The terminal 1 may send the file and terminal ID for the temporary storage for files 40 to identify the session ID from the terminal ID. From the session ID, other terminals participating in the same conference can be identified, and from the shared folder table 48, the shared folder URI can be identified.

### << Access control >>

Access control will be described. The temporary storage for files 40 can control access to the shared folder 47 according to read/write access rights.

FIG. 16B shows an example of the shared folder table 48 under access control. Compared to FIG. 16A, an account name has an access right attached. Namely, the account name of the terminal with the terminal ID "aaa" is "acc0001_rw", and its access right is "Read/Write", whereas the account name of the terminals with the terminal ID "bbb" or "ddd" is "acc0001_r", and its access right is "Read" only.

The shared folder managing section 61 gives an access right to a terminal according to the following rules specified beforehand.
- A "Read/Write" access right is given to a terminal with which a session has been established at the outset of a conference. A "Read" access right is given to a terminal coming late.
- A terminal calling for a conference arbitrarily makes a request for an access right to the management system 50 at the outset of a conference.

It is noted that the shared folder managing section 61 may give no access right to a terminal by not sending the account information to the terminal. In FIG. 16B, terminals whose terminal ID is not aaa, bbb, nor ddd (for example, a terminal with the terminal ID ccc) does not receive the account information.

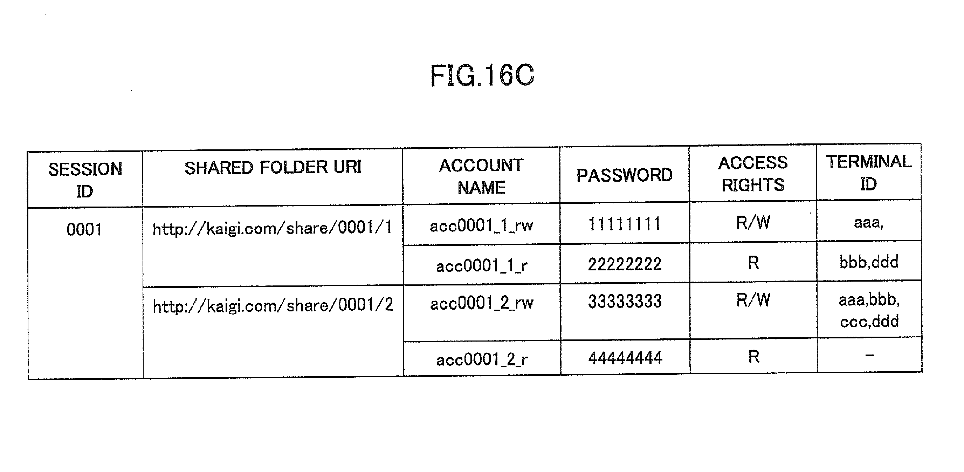

FIG. 16C shows another example of the shared folder table 48. In FIG. 16C, a session ID is registered with multiple shared folders 47. In this case, each shared folder can be set with access rights for terminals. For example, the terminals with the terminal ID bbb or ddd have a read only access right to the shared folder "http://kaigi.com/share/0001/1", whereas the terminal with the terminal ID bbb or ddd has a read/write access right to the shared folder "http://kaigi.com/share/0001/2". If there are two shared folders 47, terminals mount each of the shared folders 47, respectively.

Multiple shared folders 47 are used as follows.
- A terminal makes a request to use multiple shared folders 47 at the outset of a conference.
- In addition to a shared folder 47 with access rights shown in FIG. 16B, an additional shared folder 47 is provided with a Read/Write access right given to every terminal any time.

Access control may be executed by the terminal 10, or the temporary storage device for files 40, or by both. Namely, access control may be executed on the shared folder 47 of the temporary storage for files 40, or D drive of the terminal 1 or 2.
- Access control for write

If access control is executed on the shared folder 47 of the temporary storage for files 40, the access controlling section 43 may prevent a write of a file from the terminal 1 or 2 according to given access rights. If access control is executed on D drive of the terminal 1 or 2, the file synchronizing section 24 may prevent a write of a file from the terminal 1 or 2 according to given access rights.
- Access control for read

If access control is executed on the shared folder 47 of the temporary storage for files 40, the access controlling section 43 does not send a file name to a terminal without a read access right. If access control is executed on D drive of the terminal 1 or 2, a file name sent from the temporary storage for files 40 is discarded and the file synchronizing section 24 does not make the file name visible in D drive.

### << Example of file sharing >>

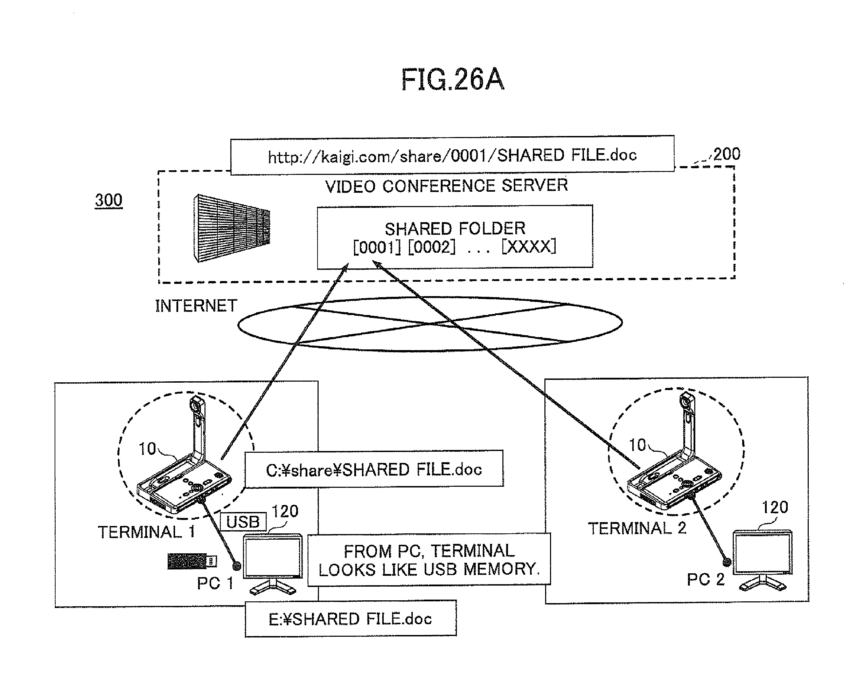

FIGS. 26A-26B are schematic views illustrating examples of file sharing. Suppose that the shared file table in FIG. 16A is adopted. Namely, the terminals 1 and 2 have a "Read/Write" access right.

In FIG. 26A, "http://kaigi.com/share/0001" is a shared folder 47. In the shared folder 47, a file "shared file .doc" is stored. The terminal 1 has mounted, for example, a drive "C:/Share". Since the terminal 1 or 2 looks like a USB memory from the PC 1 or 2, respectively, a file managing system of the PC 1 or 2 displays the file as "E:/shared file .doc". E drive is a drive for a USB memory.

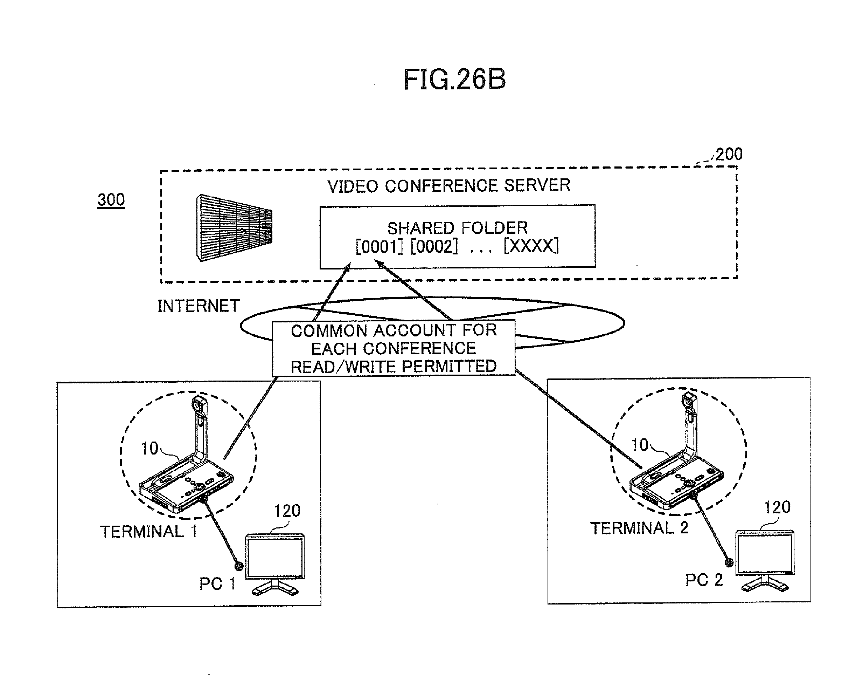

In FIG. 26B, a common account is provided in a conference. Since both the terminals 1 and 2 have a Read/Write access right, the PC 1 and 2 can share a file stored in "http://kaigi.com/share/0001".

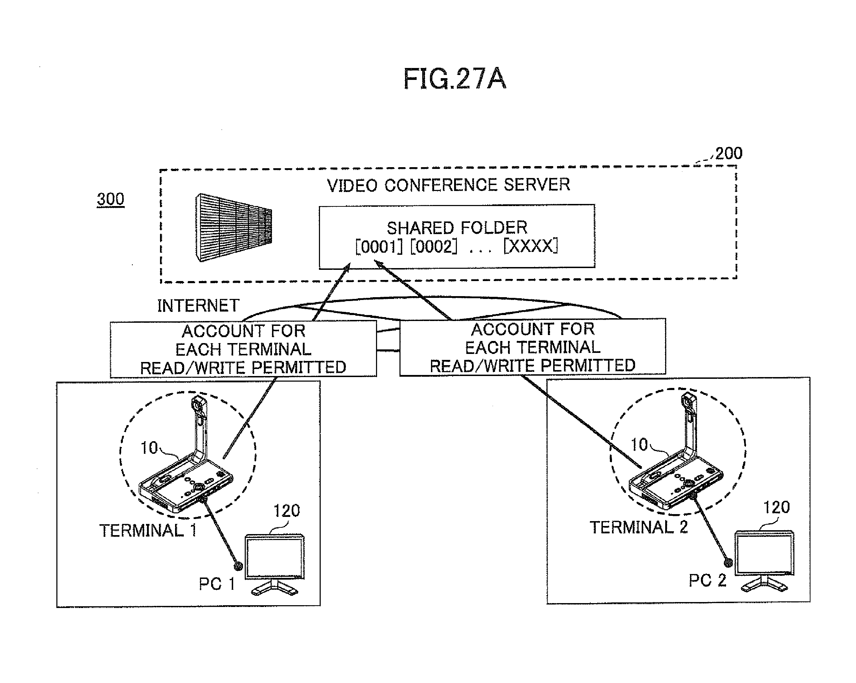

FIGS. 27A-27B are schematic views illustrating examples of file sharing. As shown in the shared folder table in FIG. 16B, terminals have different accounts. Namely, the terminal 1 may be given a read or write access right separately, and the terminal 2 may be given a read or write access right separately. In FIG. 27A, for example, both the terminals 1 and 2 have a Read/Write access right.

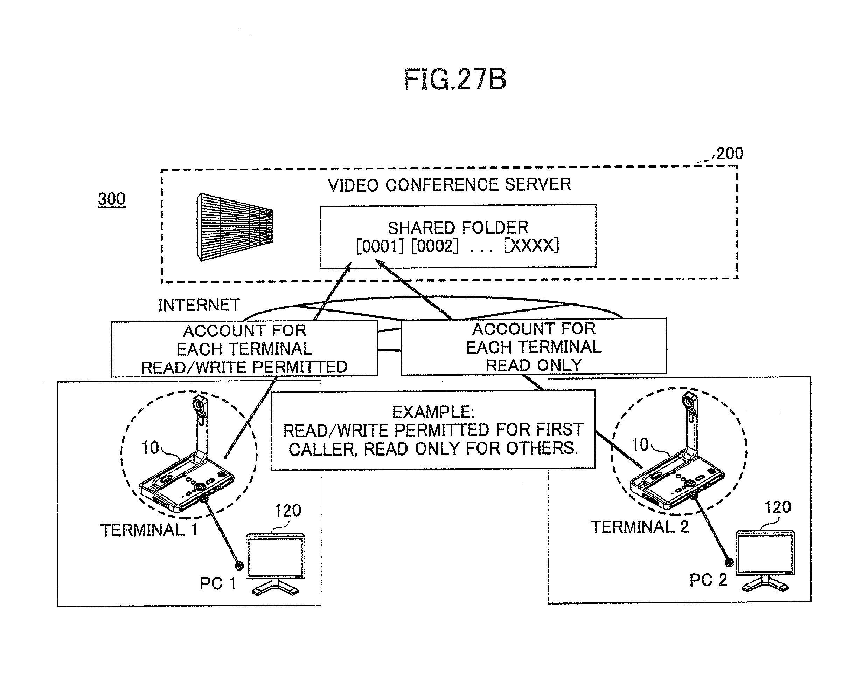

On the other hand, in FIG. 27B, for example, only the terminal 1 initiating the conference is given a Read/Write access right, while other terminals are given a read-only right. Such access control can be implemented, by the shared folder managing section 61 that gives a Read/Write access right, for example, only for a terminal that has already mounted a shared folder 47, or makes a request to generate a shared folder 47.

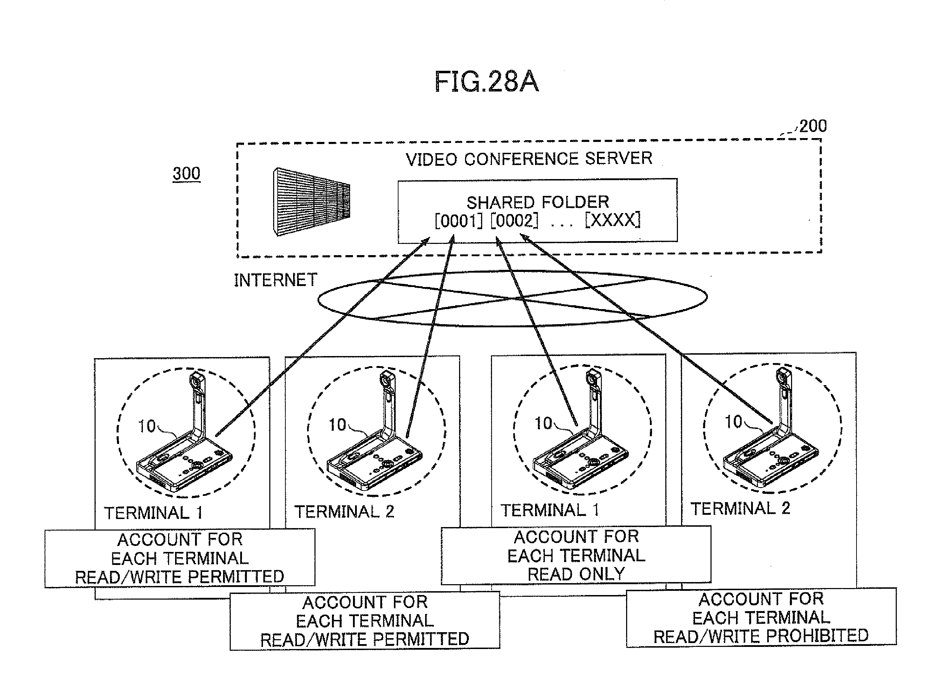

FIGS. 28A-28B are schematic views illustrating examples of file sharing. As shown in the shared folder table in FIG. 16C, terminals have different accounts. Namely, two shared folders, "http://kaigi.com/share/0001", and "http://kaigi.com/share/0002", are generated in a conference.

In FIG. 28A, the terminal 1 has a Read/Write access right to the shared folder "0001", and a read only access right to the shared folder "0002". The terminal 2 has a Read/Write access right to the shared folder "0001", and no Read/Write access right to the shared folder "0002".

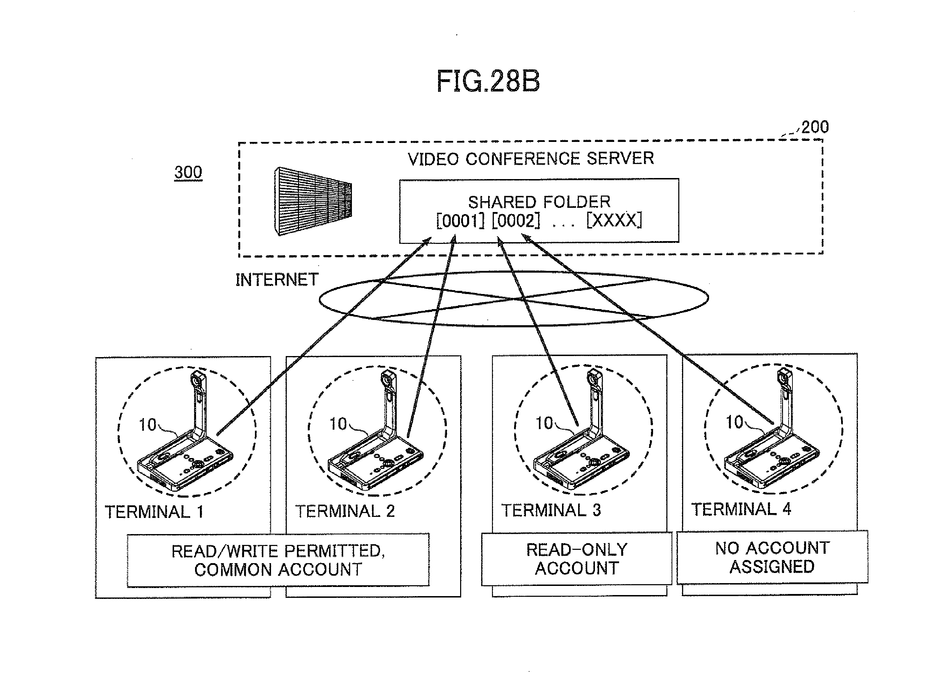

In FIG. 28B, there are four terminals 1-4. The terminals 1 and 2 have a common access right. The terminals 1 and 2 have a Read/Write access right to the shared folder "0001". The terminal 3 has a read only access right to the shared folder "0001". The terminal 4 has no access right to the shared folder "0001". To the shared folder "0002", access rights can be given for each terminal or commonly for multiple terminals.

By providing various ways to control access rights as above, flexible access control can be realized easily. For example, in a multi-site conference with terminals 1-4, the management system 50 or each of the terminals may set access control in which only the terminals 1-2 have a Read/Write access right, the terminal 3 has a read only access right, and the terminal 4 has no Read/Write access right.

For example, if a head office and multiple branch offices hold a conference, the management system 50 may set access control in which the head office terminal has a Read/Write access right, and the branch office terminals have a read only access right. Therefore, while material data from the head office can be distributed to the branch offices, the branch office terminal cannot upload material data, which prevents the material from being altered.

As described above, with the electronic conference system 300 according to the present example, when the PC 1 writes a file to the terminal 1, the terminal 1 can share the file with the terminal 2.

### << Example 2 >>

In the present example, an electronic conference system 300 will be described, in which a terminal 3 joining a conference late can share a file with terminals 1-2. Suppose a terminal 3 is a terminal that starts to participate in the conference after the conference has begun. Again in this case, it is possible to synchronize a file by having the management system 50 indicate a shared folder URI and account information to the terminal 3.

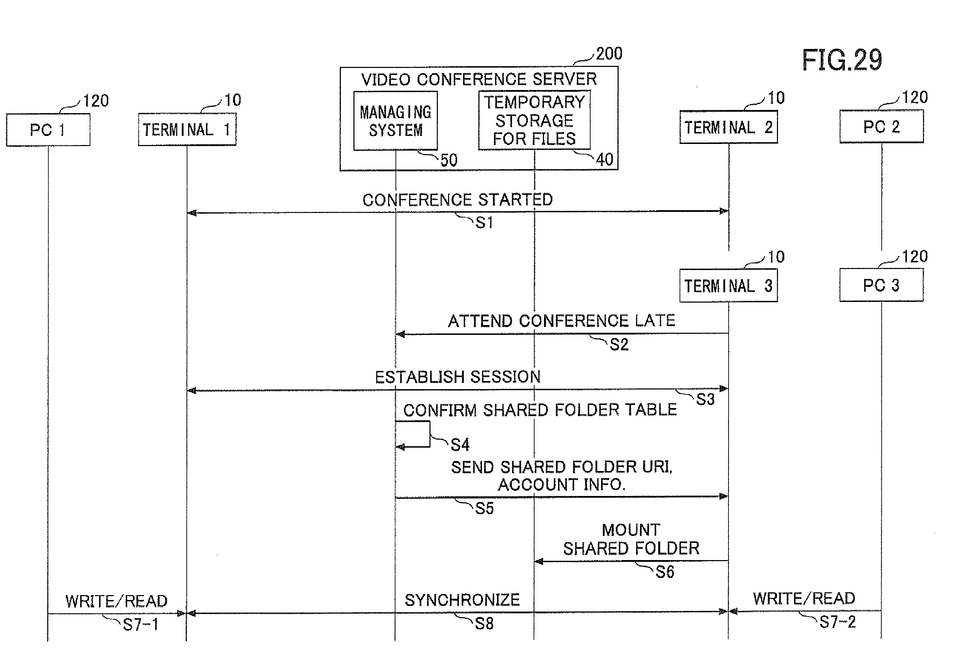

FIG. 29 is an example of a sequence chart illustrating a procedure to send/receive files among terminals in the electronic conference system 300.

### S1. Conference started

The terminals 1 and 2 have started the conference. Of course, the session has been already established.

### S2. Attend conference late

If the power of the terminal 3 is switched on, the login requesting section 13 makes a request for a login to the management system 50. A user at a PC 3 connected to the terminal 3, specifies, for example, a target terminal among the terminals that participate in the conference, to participate in the conference late.

### S3. Establish session

The management system 50 establishes a session between the terminals 1-2 and the terminal 3. The management system 50 identifies the session ID and the terminals in the conference by referring to the session managing table with the specified target terminal.

### S4. Confirm shared folder table

The shared folder managing section 61 sends the session ID to the temporary storage for files 40, to obtain the URI of the shared folder 47 of the conference and the shared folder table 48.

At this moment, access control information is generated, with which the management system 50 permits the terminal 3 a read only access right, or an access right in response to a request from the terminal 3.

### S5. Send shared folder URI, the shared folder table

The shared folder managing section 61 indicates the shared folder URI and account information to the terminal 3 participating in the conference late.

### S6. Mount shared folder

The folder mounting section 23 of the terminal 3 has the shared folder 47 mounted. With the mounting, the shared folder 47 of the temporary storage for files 40 and the mounted drive of the terminal 3 start to synchronize. The file synchronizing section 44 sends file names of files stored in the shared folder 47 to the terminal 3. Then, the PC 3 can display the file names in the mounted drive of the terminal 3 on the display 208 as if they were in a USB memory.

According to the present example, a terminal starting late to participate in a conference can share files which have been shared among other terminals, once the late-starting terminal establishes participation in the conference.

### << Example 3 >>

In the present example, a shared folder 47 after the end of a conference will be explained. If a file is stored in a shared folder 47 as described in Example 1 or 2, it is desirable to delete the file afterward for the sake of security.

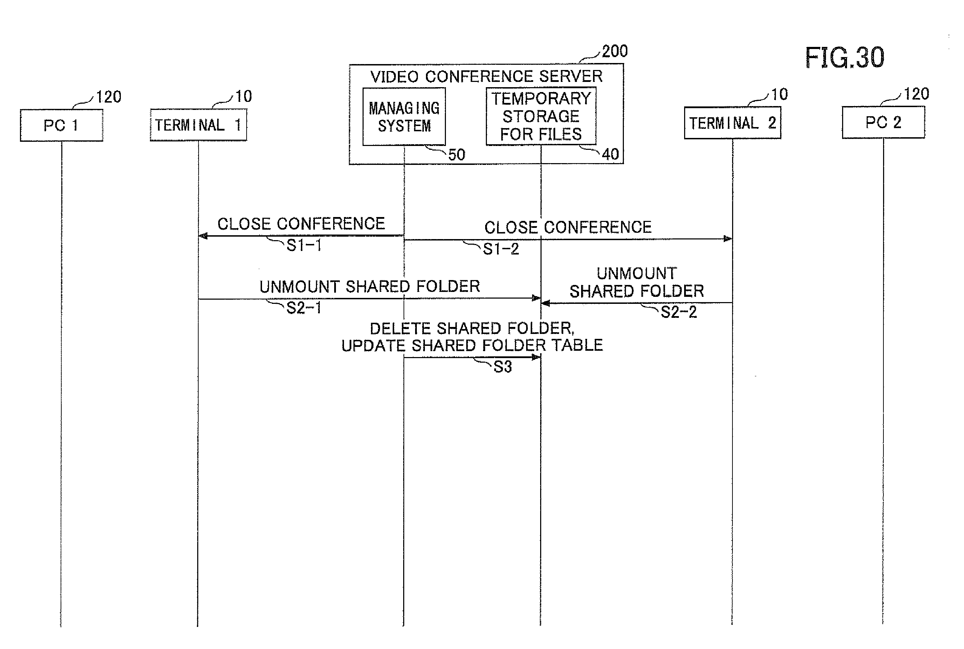

FIG. 30 is an example of a sequence chart illustrating a procedure to terminate an electronic conference system 300.

### S1-1, S1-2 Close conference

A conference may be closed with events such that one of the terminals 10 indicates the end of the conference to the management system 50, all the terminals 10 in the session managing table cease responding to a query from the management system 50, etc. Suppose a conference has been closed under control of the management system 50. The management system 50 indicates the end of the conference to the terminals 1-2, respectively.

### S2-1, 2-2. Unmount shared folder

Detecting the end of the conference, the folder mounting section 23 of the terminal 1-2 unmounts the shared folder 47 of the temporary storage for files 40. An unmount command, for example in SMB, is as follows.

### unmount mounted_path

With unmounting, the file synchronizing section 24 deletes D drive of the terminals 1-2 that has been mounted. After that, the PCs 1-2 cannot display file names in D drive.

### S3. Delete shared folder

The shared folder generating section 42, upon the end of the conference, based on the session ID of the ended conference, makes a request to delete the shared folder 47 from the folder storing section 41 to the temporary storage for files 40. By deleting the shared folder 47, the shared folder generating section 42 deletes all the files sent from the terminal.

The access controlling section 43 updates the shared folder table 47 by deleting records relevant to the ended conference from the shared folder table 47 in the file managing database 46.

According to the present example, security level can be maintained because files can be deleted from the temporary storage for files 40 after the end of the conference.

### << Example 4 >>

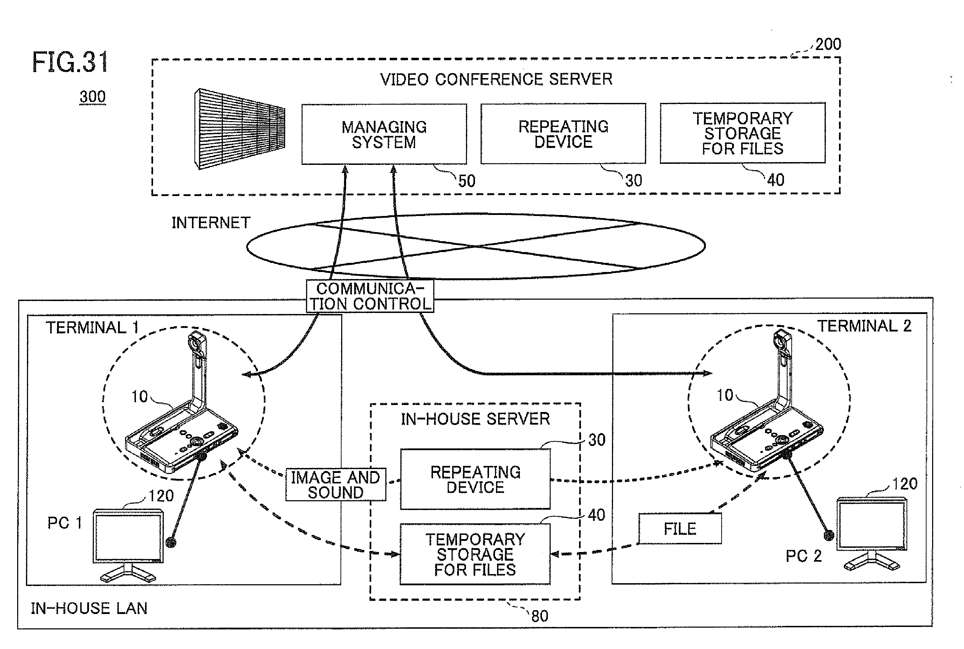

In the present example, an electronic conference system 300 with high-level security will be explained. FIG. 31 is an example of an overall configuration diagram of the electronic conference system 300. In FIG. 31, the same numeric codes are assigned to the same sections as in FIG. 23, which will not be explained here.

In FIG. 31, a terminal 1 and a terminal 2 are connected via an in-house LAN. An in-house server 80 is installed in house, along with the repeating device 30 and the temporary storage for files 40 also in house. It is noted that the in-house server 80 is not necessarily located physically in-house, but may be installed at outside connected with a secured network such as VPN (Virtual Private Network) or the like.

Having established a session, the management system 50 sets a repeating device ID in the session managing table, after identifying the repeating device 30 to relay image and sound data. Therefore, comparing the network address portion of IP addresses of the repeating device 30 and the terminal 10, it is possible to determine that the terminals 1-2 use a repeating device 30 connected to the in-house LAN. If the network address cannot be obtained directly, the IP address may be obtained by querying a DNS. Then, by comparing host names or the like, it is possible to determine that the terminals 1-2 and the repeating device 30 are connected to the same LAN.

With a configuration as shown in FIG. 31, since the terminals 1-2 can use an image/audio data router in private, or in-house, network, as a repeating device, it is possible to hold a conference without image/audio data going outside. Therefore, it is possible to achieve high-level security for file sharing by installing the temporary storage for files 40 in an in-house LAN.

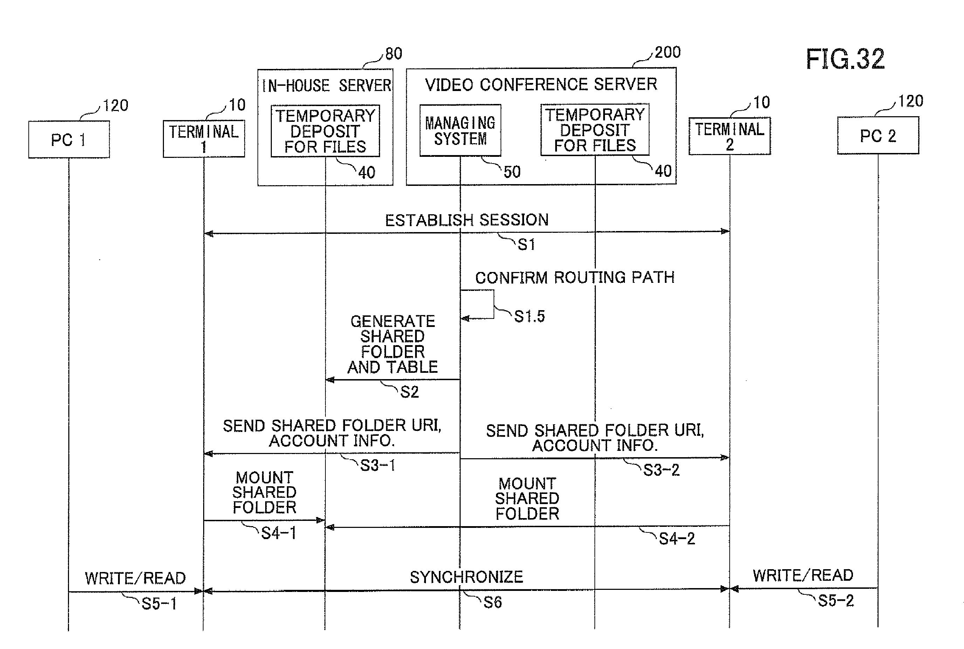

FIG. 32 is an example of a sequence chart illustrating a procedure to send/receive files between terminals in the electronic conference system 300. FIG. 32 is substantially the same as FIG. 24 according to the Example 1, except that the management system 50 confirms routing paths after a conference has been started, at Step S1.5.

### S1.5. Confirm routing paths

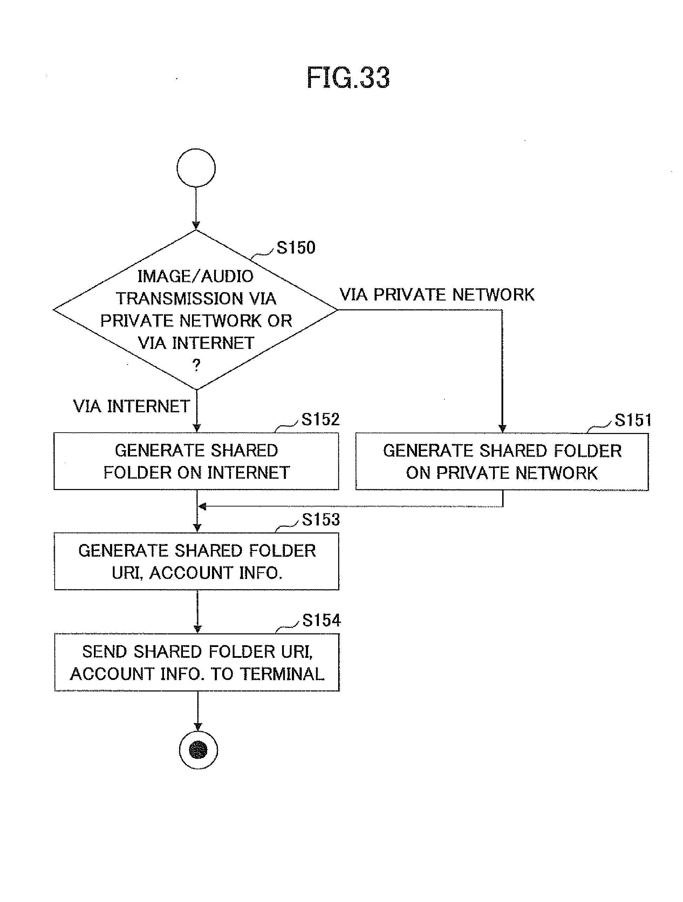

FIG. 33 is an example of a flowchart illustrating a procedure for the management system to confirm routing paths.

The management system 50 confirms routing paths of a conference soon after the conference has started, at Step S150.

If using the Internet, the management system 50 generates a shared folder 47 outside or on the Internet, as done in Example 1, at Step S152.

If using a private network, the management system 50 generates a shared folder 47 in a server in the private network, for example, an in-house server or the repeating device 30, at Step S151.

The rest of the procedure is the same as in Example 1. Namely, the management system 50 generates a shared folder URI and account information, to send to the temporary storage for files 40, at Step S153.

The management system 50 also indicates the shared folder URI and account information to the terminals 1-2 at Step S154.

Thus, the terminals 1-2 mount the specified URI to the mount drive 22 without caring the location to store a file.

According to the present example, a shared folder URI can be changed by a terminal participating in a conference. Using a private network, a file does not go outside even temporarily, which reduces security risk substantially.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

Further, the present invention is not limited to these embodiments and examples, but various variations and modifications may be made without departing from the scope of the present invention.

The present application is based on Japanese Priority Application No. 2012-039317, filed on Feb. 24, 2012, with the Japanese Patent Office, the entire contents of which are hereby incorporated by reference.

## Claims

1. A communication system including a repeating device to relay contents data to multiple terminals participating in a conference, and a file sharing device to provide a file to the multiple terminals, **characterized by** comprising:
a section to generate location information of a shared folder to be accessed commonly by the multiple terminals, the generated location being indicated to the multiple terminals; and
a table of participating terminals for registering identification information of the multiple terminals participating in the conference, associated with identification information of the conference,
wherein the file sharing device includes
a shared folder to be generated at the location designated by the location information of the shared folder;
a file sharing table to register the location information of the shared folder associated with the identification information of the conference; and
a first file synchronizing section to send file information of a file sent by a terminal, to other terminals participating in the same conference, if the file sent from the terminal is stored in the shared folder;
wherein each of the multiple terminals includes:
a folder mounting section to make a request to the file sharing device to mount the shared folder on the requesting terminal; and
a second file synchronizing section to send a file stored in a storage area generated with the mounting to the shared folder.

2. The communication system as claimed in claim 1,
wherein the section to generate location information of a shared folder, determines whether a file can be written to, and/or can be read from, the shared folder by each of the multiple terminals, the determination being registered in the file sharing table for each of the multiple terminals,
wherein the first file synchronizing section, when a file is sent to the shared folder by a terminal, stores the file in the shared folder only if the terminal sending the file is permitted to write the file,
wherein the first file synchronizing section, when the file is stored in the shared folder, sends the file information of the file to the other terminals only if the other terminals are permitted to read the file.

3. The communication system as claimed in claim 2,
wherein the section to generate location information of the shared folder, registers a plurality of the location information of shared folders associated with the identification information of the conference registered in the file sharing table, determines whether a file can be written to, and/or can be read from, each of the shared folders by each of the multiple terminals, the determination being registered in the file sharing table.

4. The communication system as claimed in claim 2 or 3,
wherein the section to generate location information of a shared folder, determines whether a file can be written to, and/or can be read from, one or plural of the shared folders by a group of the multiple terminals, the determination being registered in the file sharing table for each group of the multiple terminals.

5. The communication system as claimed in claim 1 to 4, further comprising a conference managing device to establish a conference session among the multiple terminals,
wherein if the multiple terminals receive an ending notice of communication from the conference managing device, the folder mounting section makes a request to the file sharing device to unmount one or more of the shared folders, then in response to the request, the file sharing device deletes the one or more of the shared folders generated at the location designated by the location information of shared folders.

6. The communication system as claimed in claim 1 to 3,
wherein the section to generate location information of a shared folder, determines whether the repeating device and all the multiple terminals are connected to a same in-house network,
if the repeating device and all the multiple terminals are connected to the same in-house network, generates the location information of shared folders to designate a location in the in-house network, and
if any of the repeating device or the multiple terminals is not connected to the same in-house network, generates the location information of shared folders to designate a location outside of the in-house network,

7. The communication system as claimed in claim 1 to 6,
wherein the multiple terminals are connected with an external device, sends a file name of a file stored in the storage area generated with the mount to the external device, to have the external device display the file name on a display device.

8. A communication system **characterized by** comprising:
a repeating device to relay contents data to multiple terminals participating in a conference;
a conference managing device including
a section to generate location information of a shared folder to be accessed commonly by the multiple terminals, the generated location being indicated to the multiple terminals; and
a table of participating terminals for registering identification information of the multiple terminals participating in the conference, associated with identification information of the conference;
a file sharing device including
a shared folder to be generated at the location designated by the location information of shared folder;
a file sharing table to register the location information of the shared folder associated with identification information of the conference; and
a first file synchronizing section to send file information of a file sent by a terminal, to other terminals participating in the same conference, if the file sent from the terminal is stored in the shared folder;
each of the multiple terminals including
a folder mounting section to make a request to the file sharing device to mount the shared folder on the requesting terminal itself; and
a second file synchronizing section to send a file stored in a storage area generated with the mounting to the shared folder; and
a program executable by a computer capable of writing a file to the storage area of the multiple terminals.

9. A server including
a repeating device to relay contents data to multiple terminals participating in a conference,
a file sharing device to provide a file in a shared folder to the multiple terminals,
the server being connected via a network to each of the multiple terminals which includes
a folder mounting section to make a request to the file sharing device to mount the shared folder on the requesting terminal itself, and
a second file synchronizing section to send a file stored in a storage area generated with the mounting to the shared folder,
the server **characterized by** comprising:
a section to generate location information of a shared folder to be accessed commonly by the multiple terminals, the generated location being indicated to the multiple terminals;
a table of participating terminals for registering identification information of the multiple terminals participating in the conference, associated with identification information of the conference,
a shared folder to be generated at the location designated by the location information of the shared folder;
a file sharing table to register the location information of the shared folder associated with the identification information of the conference; and
a first file synchronizing section to send file information of a file sent by one of the multiple terminals, to other terminals participating in the same conference, if the file sent from the terminal is stored in the shared folder.

10. A terminal connected via a network with,
a repeating device to relay contents data to multiple of the terminals participating in a conference,
a conference managing device including
a section to generate location information of a shared folder to be accessed commonly by the multiple terminals, the generated location being indicated to the multiple terminals; and
a table of participating terminals for registering identification information of the multiple terminals participating in the conference, associated with identification information of the conference; and
a file sharing device including
a shared folder to be generated at the location designated by the location information of the shared folder;
a file sharing table to register the location information of the shared folder associated with the identification information of the conference; and
a first file synchronizing section to send file information of a file sent by one of the multiple terminals, to other terminals participating in the same conference, if the file sent from the terminal is stored in the shared folder,
the terminal **characterized by** comprising:
a folder mounting section to make a request to the file sharing device to mount the shared folder on the requesting terminal itself, and
a second file synchronizing section to send a file stored in a storage area generated with the mounting to the shared folder.

11. A computer capable of writing a file to the storage areas of the multiple terminals as claimed in claim 10.

12. A non-transitory computer-readable recording medium having a program stored therein for causing a computer to execute a method of managing a conference via a network, the network connecting
a repeating device to relay contents data to multiple terminals participating in the conference,
a conference managing device including
a section to generate location information of a shared folder to be accessed commonly by the multiple terminals, the generated location being indicated to the multiple terminals; and
a table of participating terminals for registering identification information of the multiple terminals participating in the conference, associated with identification information of the conference, and
a file sharing device including
a shared folder to be generated at the location designated by the location information of shared folder;
a file sharing table to register the location information of the shared folder associated with identification information of the conference; and
a first file synchronizing section to send file information of a file sent by one of the multiple terminals, to other terminals participating in the same conference, if the file sent from the terminal is stored in the shared folder,
the method **characterized by** comprising:
requesting the file sharing device to mount the shared folder on the requesting device itself; and
synchronizing a file stored in a storage area generated with the mounting, by sending the file to the shared folder.
